# EUROPEAN PATENT APPLICATION

(11) **EP 3 564 247 A1**
(43) Date of publication of application: **06.11.2019**
(21) Application number: 17888619.8
(22) Date of filing: 27.12.2017
(51) Int. Cl.: C07F 9/53, C08F 30/02, C09K 3/18, C09K 21/12

(54) **PHOSPHORUS-CONTAINING (METH)ACRYLATE ESTER DERIVATIVE**

(30) Priority: 28.12.2016 JP 2016256290
(71) Applicant: Katayama Chemical Industries Co., Ltd., Osaka-shi, Osaka 541-0045 (JP)
(72) Inventor: SHINOHARA Hiroyuki, Amagasaki-Shi Hyogo 660-0892 (JP); MINO Yuka, Amagasaki-Shi Hyogo 660-0892 (JP); MUKAI Takeshi, Amagasaki-Shi Hyogo 660-0892 (JP); KATAYAMA Toshiaki, Amagasaki-Shi Hyogo 660-0892 (JP); FUJINO Hiroyoshi, Amagasaki-Shi Hyogo 660-0892 (JP); IKAWA Eiichi, Amagasaki-Shi Hyogo 660-0892 (JP)
(74) Representative: Uexküll & Stolberg
(86) International application number: PCT/JP2017/046988
(87) International publication number: WO 2018/124205

(57) **Abstract**

Provided is a novel phosphorus compound. A compound represented by general formula (I) 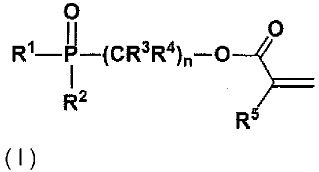 or a salt thereof. (In the formula, each of R¹ and R² independently represents a substituted or unsubstituted aryl group; each of R³ and R⁴ independently represents a hydrogen atom, or a substituted or unsubstituted alkyl group; n represents an integer of 1 or more, and in cases where n is 2 or more, the R³ moieties may be the same as or different from each other, and the R⁴ moieties may be the same as or different from each other; and R⁵ represents a hydrogen atom, or a substituted or unsubstituted alkyl group.)

## Description

### [Technical Field]

The present invention relates to a phosphorous containing (meth)acrylic acid ester derivative.

### [Background Art]

Phosphorous compounds are used in various applications due to their properties. A compound comprising acrylic acid or methacrylic acid and phosphorous has utility as a raw material for synthesizing various materials. It is worthwhile to provide a novel compound comprising phosphorous.

Patent Literature 1 and Patent Literature 2 disclose phosphine oxide-(meth)acrylic acid ester compounds with the following general formula A: 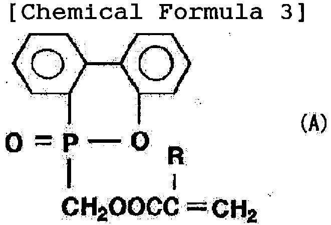 wherein R is H or CH₃.

### [Citation List]

### [Patent Literature]

[PTL 1] Japanese Laid-Open Publication No. 7-48394
[PTL 2] Japanese Laid-Open Publication No. 2010-191215

### [Summary of Invention]

### [Solution to Problem]

The inventors have synthesized a novel compound of a (meth)acrylic acid ester derivative comprising diarylphosphine oxide with high utility as a result of diligent effort.

The present invention provides a method of synthesizing a (meth)acrylic acid ester derivative comprising diarylphosphine oxide, which was considered especially challenging in the past.

The present invention also provides the following items.
(Item 1)
   A compound set forth in the following general formula (I) 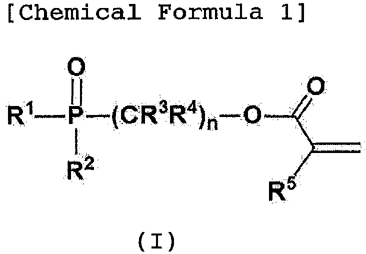 or a salt thereof, wherein
   R¹ and R² are each independently a substituted or unsubstituted aryl group,
   R³ and R⁴ are each independently hydrogen or a substituted or unsubstituted alkyl group,
   n is 1 or 2, wherein if n is 2, each R³ may be the same or different, and each R⁴ may be the same or different, and
   R⁵ is hydrogen or a substituted or unsubstituted alkyl group.
(Item 2)
   The compound or salt of item 1, wherein R⁵ is hydrogen or a methyl group.
(Item 3)
   The compound or salt of item 1 or 2, wherein R³ and R⁴ are each independently hydrogen or a C1-C4 alkyl group.
(Item 4)
   The compound or salt of any one of items 1 to 3, wherein a substituent on the aryl group in R¹ and R² is selected from the group consisting of halogen, alkyl, - Oalkyl, -OH, -NO₂, -NH₂, -C(=O)H, -C(=O)alkyl, and - C(=O)Oalkyl.
(Item 5)
   The compound or salt of any one of items 1 to 4, wherein a substituent on the aryl group in R¹ and R² is selected from the group consisting of halogen, -C1-C4 alkyl, -OC1-C4 alkyl, -OH, -NO₂, -NH₂, -C(=O)H, -C(=O)C1-C4 alkyl, and -C(=O)OC1-C4 alkyl.
(Item 6)
   The compound or salt of any one of items 1 to 3, wherein R¹ and R² are both phenyl groups.
(Item 7)
   A homopolymer or a copolymer comprising, as a constituent component, the following general formula (II) 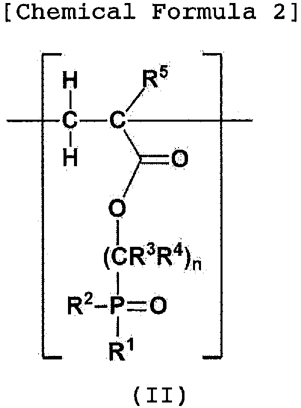 wherein
   R¹ and R² are each independently a substituted or unsubstituted aryl group,
   R³ and R⁴ are each independently hydrogen or a substituted or unsubstituted alkyl group,
   n is 1 or 2, wherein if n is 2, each R³ may be the same or different, and each R⁴ may be the same or different, and
   R⁵ is hydrogen or a substituted or unsubstituted alkyl group.
(Item 8)
   The homopolymer or copolymer of item 7, wherein R⁵ is hydrogen or a methyl group.
(Item 9)
   The homopolymer or copolymer of item 7 or 8, wherein R³ and R⁴ are each independently hydrogen or a C1-C4 alkyl group.
(Item 10)
   The homopolymer or copolymer of any one of items 7 to 9, wherein a substituent on the aryl group in R¹ and R² is selected from the group consisting of halogen, alkyl, - Oalkyl, -OH, -NO₂, -NH₂, -C(=O)H, -C(=O)alkyl, and - C(=O)Oalkyl.
(Item 11)
   The homopolymer or copolymer of any one of items 7 to 10, wherein a substituent on the aryl group in R¹ and R² is selected from the group consisting of halogen, -C1-C4 alkyl, -OC1-C4 alkyl, -OH, -NO₂, -NH₂, -C(=O)H, -C(=O)C1-C4 alkyl, and -C(=O)OC1-C4 alkyl.
(Item 12)
   The homopolymer or copolymer of any one of items 7 to 9, wherein R¹ and R² are both phenyl groups.
(Item 13)
   The copolymer of any one of items 7 to 12, which is a copolymer of (meth)acrylic acid, (meth)acrylic acid ester, (meth)acrylic acid halide, (meth)acrylate, styrene, or acrylonitrile.
(Item 14)
   The compound or salt of any one of items 1 to 6, wherein the compound or salt is a solid.
(Item 15)
   The compound or salt of any one of items 1 to 6, wherein the compound or salt is powder.
(Item 16)
   An additive comprising the compound or salt of any one of items 1 to 6 and 14 to 15.
(Item 17)
   An anti-fog agent comprising the compound or salt of any one of items 1 to 6 and 14 to 15.
(Item 18)
   A flame retardant comprising the compound or salt of any one of items 1 to 6 and 14 to 15.
(Item 19)
   An electrical/electronic component, an office appliance related component, an automobile component, a train component, an aircraft component or a fiber comprising the compound or salt of any one of items 1 to 6 and 14 to 15.
(Item 20)
   A sheet, a film, or acrylic glass comprising the compound or salt of any one of items 1 to 6 and 14 to 15.
(Item 21)
   A polymerization additive comprising the compound or salt of any one of items 1 to 6 and 14 to 15.
(Item 22)
   A surface modifier comprising the compound or salt of any one of items 1 to 6 and 14 to 15.
(Item 23)
   A phosphorous adding agent comprising the compound or salt of any one of items 1 to 6 and 14 to 15.
(Item 24)
   An additive comprising the homopolymer or copolymer of any one of items 7 to 13.
(Item 25)
   An anti-fog agent comprising the homopolymer or copolymer of any one of items 7 to 13.
(Item 26)
   A flame retardant comprising the homopolymer or copolymer of any one of items 7 to 13.
(Item 27)
   An electrical/electronic component, an office appliance related component, an automobile component, a train component, an aircraft component, or a fiber comprising the homopolymer or copolymer of any one of items 7 to 13.
(Item 28)
   A sheet, a film, or acrylic glass comprising the homopolymer or copolymer of any one of items 7 to 13.
(Item 29)
   A polymerization additive comprising the homopolymer or copolymer of any one of items 7 to 13.
(Item 30)
   A surface modifier comprising the homopolymer or copolymer of any one of items 7 to 13.
(Item 31)
   A phosphorous adding agent comprising the homopolymer or copolymer of any one of items 7 to 13.
(Item 32)
   A method of manufacturing the following general formula (III) 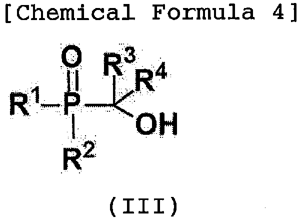 wherein R¹ and R² are each independently a substituted or unsubstituted aryl group, and R³ and R⁴ are each independently hydrogen or a substituted or unsubstituted alkyl group, comprising the step of reacting diarylphosphine oxide: 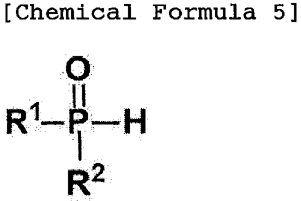 wherein R¹ and R² are as defined above, with ketone or aldehyde: 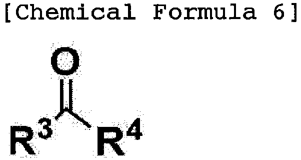 wherein R³ and R⁴ are as defined above.
(Item 33)
   A method of manufacturing the following general formula (IV) 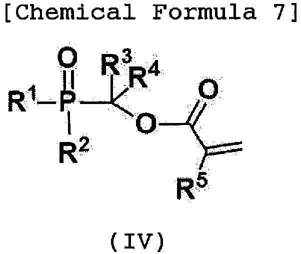 wherein R¹ and R² are each independently a substituted or unsubstituted aryl group, R³ and R⁴ are each independently hydrogen or a substituted or unsubstituted alkyl group, and R⁵ is hydrogen or a substituted or unsubstituted alkyl group, comprising the step of reacting the following general formula (III) 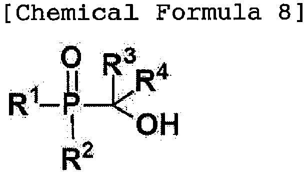 (III)
   wherein R¹, R², R³, and R⁴ are as defined above, with (meth)acrylic acid chloride or (meth)acrylic acid 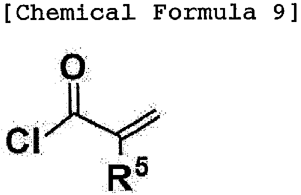 or 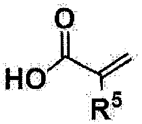 wherein R⁵ is as defined above.
(Item 34)
   A method of manufacturing the following general formula (V) 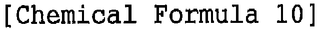 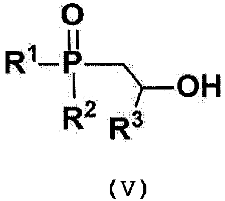 wherein R¹ and R² are each independently a substituted or unsubstituted aryl group, and R³ is hydrogen or a substituted or unsubstituted alkyl group, comprising the step of reacting diarylphosphine oxide: 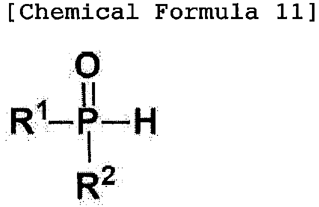 wherein R¹ and R² are as defined above, with ethylene oxide: 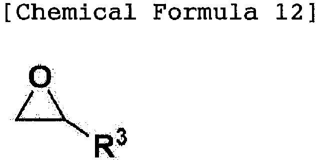 wherein R³ is as defined above.
(Item 35)
   A method of manufacturing the following general formula (VI) 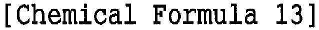 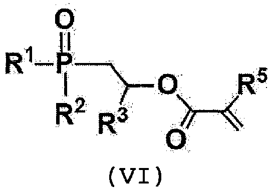 wherein R¹ and R² are each independently a substituted or unsubstituted aryl group, R³ is hydrogen or a substituted or unsubstituted alkyl group, and R⁵ is hydrogen or a substituted or unsubstituted alkyl group, comprising the step of reacting the following general formula (V) 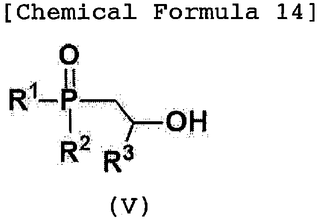 wherein R¹, R², and R³ are as defined above, with (meth)acrylic acid chloride or (meth)acrylic acid 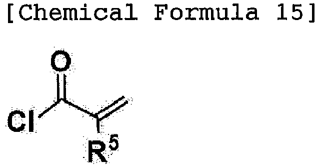 or 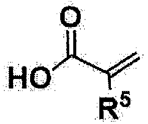 wherein R⁵ is as defined above.
(Item 36)
   A method of treating a surface using the compound or salt of any one of items 1 to 6 to 14 to 15, wherein the method reduces water absorption of a surface.
(Item 37)
   The method of treating a surface of item 36, comprising the step of polymerizing the compound or salt set forth in general formula (I) to the surface.
(Item 38)
   The method of treating a surface of item 36 or 37, wherein the surface is resin or glass.
(Item 39)
   The phosphorous adding agent of item 23, which can be used in the manufacture of a fertilizer, an agricultural chemical, a drug, an insecticide, gunpowder, an electronic material, a catalyst, a flame retardant, a metal surface treating agent, a detergent, antifreeze, a surfactant, an antifoaming agent, a lubricant, and the like.

The present invention is intended so that one or more of the above features can be provided as the explicitly disclosed combinations as well as other combinations thereof. Additional embodiments and advantages of the present invention are recognized by those skilled in the art by reading and understanding the following detailed explanation, as needed.

### [Advantageous Effects of Invention]

The present invention provides a novel compound, which is a phosphorous containing (meth)acrylic acid ester derivative. A polymer prepared with such a novel compound has low water absorption and can be used in various applications. The phosphorous containing (meth)acrylic acid ester derivative of the invention can impart a property of phosphorous to many substances by simple radical polymerization. The phosphorous containing (meth)acrylic acid ester derivative of the invention can be a solid such as powder, which is easy to handle.

### [Brief Description of Drawings]

[Figure 1] Figure **1** is a GC-MS spectrum of compound 1. The vertical axis indicates the relative intensity of a signal, and the horizontal axis indicates m/z (mass/charge).
[Figure 2] Figure **2** is a GC-MS spectrum of compound 2. The vertical axis indicates the relative intensity of a signal, and the horizontal axis indicates m/z (mass/charge).
[Figure 3] Figure **3** is a GC-MS spectrum of compound 3. The vertical axis indicates the relative intensity of a signal, and the horizontal axis indicates m/z (mass/charge).
[Figure 4] Figure **4** is a GC-MS spectrum of compound 4. The vertical axis indicates the relative intensity of a signal, and the horizontal axis indicates m/z (mass/charge).
[Figure 5] Figure **5** is a GC-MS spectrum of compound 5. The vertical axis indicates the relative intensity of a signal, and the horizontal axis indicates m/z (mass/charge).
[Figure 6] Figure **6** is a GC-MS spectrum of compound 6. The vertical axis indicates the relative intensity of a signal, and the horizontal axis indicates m/z (mass/charge).
[Figure 7] Figure **7** is a GC-MS spectrum of compound 7. The vertical axis indicates the relative intensity of a signal, and the horizontal axis indicates m/z (mass/charge).
[Figure 8] Figure **8** is a GC-MS spectrum of compound 8. The vertical axis indicates the relative intensity of a signal, and the horizontal axis indicates m/z (mass/charge).
[Figure 9] Figure **9** shows the measurement of the molecular weight of a homopolymer of compound 1 by GPC.
[Figure 10] Figure **10** shows the measurement of the molecular weight of a homopolymer of compound 4 by GPC.
[Figure 11] Figure **11** shows the measurement of the molecular weight of a homopolymer of methyl acrylate (homopolymer 1) by GPC.
[Figure 12] Figure **12** shows the measurement of the molecular weight of a copolymer of methyl acrylate and compound 1 (copolymer 2) by GPC.
[Figure 13] Figure **13** shows the measurement of the molecular weight of a copolymer of methyl acrylate and compound 4 (copolymer 3) by GPC.
[Figure 14] Figure **14** shows the measurement of the molecular weight of a copolymer of methyl methacrylate and compound 4 (copolymer 4) by GPC.
[Figure 15] Figure **15** shows the measurement of the molecular weight of a copolymer of methyl methacrylate and compound 4 (copolymer 5) by GPC.
[Figure 16] Figure **16** shows the measurement of the molecular weight of a copolymer of styrene and compound 4 (copolymer 6) by GPC.
[Figure 17] Figure **17** shows the measurement of the molecular weight of a copolymer of acrylonitrile and compound 4 (copolymer 7) by GPC.
[Figure 18] Figure **18** shows the measurement of the molecular weight of a copolymer of methyl acrylate and compound 8 (copolymer 8) by GPC.

### [Description of Embodiments]

The present invention is described hereinafter with the best modes of the invention. Throughout the entire specification, a singular expression should be understood as encompassing the concept thereof in plural form, unless specifically noted otherwise. Thus, singular articles (e.g., "a", "an", "the", and the like in the case of English) should also be understood as encompassing the concept thereof in plural form, unless specifically noted otherwise. Further, the terms used herein should be understood to be used in the meaning that is commonly used in the art, unless specifically noted otherwise. Thus, unless defined otherwise, all terminologies and scientific technical terms that are used herein to have the same meaning as the general understanding of those skilled in the art to which the present invention pertains. In case of a contradiction, the present specification (including the definitions) takes precedence.

### (Definitions of the terms)

The terms used herein are explained hereinafter.

As used herein, "substitution" refers to a substitution of a specific hydrogen atom of an organic compound with another atom or a group of atoms.

As used herein, "substituent" refers to an atom or a functional group that has replaced another in a chemical structure.

As used herein, a substitution refers to substitution of one or more hydrogen atoms in an organic compound or a substituent with another atom or a group of atoms, or formation of a double bond or a triple bond, unless specifically noted otherwise. A hydrogen atom can be removed and substituted with a monovalent substituent, or a double bond can be formed together with a single bond. In addition, two hydrogen atoms can be removed and substituted with a divalent substituent, or a triple bond can be formed together with a single bond.

Examples of substituents in the present invention include, but are not limited to, hydrogen, halogen group, alkyl group, alkoxy group, -OH group, NO₂ group, -NH₂ group, -C(=O)H group, alkylcarbonyl group, and alkoxycarbonyl group. Examples of preferred groups of substituents in the present invention include halogen, alkyl, -Oalkyl, -OH, - NO₂, -NH₂, -C(=O)H, -C(=O)alkyl, and -C(=O)Oalkyl. Examples of more preferred groups of substituents in the present invention include halogen, -C1-C4 alkyl (e.g., -CH₃), -OC1-C4 alkyl (e.g., -OCH₃), -OH, -NO₂, -NH₂, -C(=O)H, -C(=O)C1-C4 alkyl (e.g., -C(=O)CH₃), and -C(=O)OC1-C4 alkyl. A compound may have substituents that are all substituents other than hydrogen.

As used herein, C1, C2 ... Cn represents the number of carbons (wherein n indicates any positive integer). Therefore, C1 is used to represent a substituent with one carbon.

As used herein, "alkyl" refers to a monovalent group resulting from a loss of a hydrogen atom from an aliphatic hydrocarbon (alkane) such as methane, ethane, or propane, and is generally represented as CₙH₂ₙ₊₁- (wherein n is a positive integer). Alkane can be straight or branched. As used herein, "substituent alkyl" refers to alkyl with H of alkyl substituted with a substituent defined above. Specific examples thereof include C1-C2 alkyl, C1-C3 alkyl, C1-C4 alkyl, C1-C5 alkyl, C1-C6 alkyl, C1-C7 alkyl, C1-C8 alkyl, C1-C9 alkyl, C1-C10 alkyl, C1-C11 alkyl, C1-C20 alkyl, C1-C2 substituted alkyl, C1-C3 substituted alkyl, C1-C4 substituted alkyl, C1-C5 substituted alkyl, C1-C6 substituted alkyl, C1-C7 substituted alkyl, C1-C8 substituted alkyl, C1-C9 substituted alkyl, C1-C10 substituted alkyl, C1-C11 substituted alkyl, and C1-C20 substituted alkyl. In this regard, C1-C10 alkyl, for example, refers to a straight or branched alkyl with 1 to 10 carbon atoms, such as methyl(CH₃-), ethyl(C₂H₅-), n-propyl(CH₃CH₂CH₂-), isopropyl ((CH₃)₂CH-), n-butyl (CH₃CH₂CH₂CH₂-), n-pentyl(CH₃CH₂CH₂CH₂CH₂-), n-hexyl (CH₃CH₂CH₂CH₂CH₂CH₂-), n-heptyl (CH₃CH₂CH₂CH₂CH₂CH₂CH₂-), n-octyl(CH₃CH₂CH₂CH₂CH₂CH₂CH₂CH₂-), n-nonyl(CH₃CH₂CH₂CH₂CH₂CH₂CH₂CH₂CH₂-), n-decyl(CH₃CH₂CH₂CH₂CH₂CH₂CH₂CH₂CH₂CH₂-), -C(CH₃)₂CH₂CH₂CH(CH₃)₂, and -CH₂CH(CH₃)₂. For example, C1-C10 substituted alkyl refers to C1-C10 alkyl with one or more hydrogen atoms therein substituted with a substituent.

As used herein, "alkoxy" refers to a monovalent group resulting from loss of a hydrogen atom of a hydroxy group of alcohols, and is generally represented as CₙH₂ₙ₊₁O-(wherein n is an integer that is 1 or greater). "Substituted alkoxy" refers to alkoxy with H of alkoxy substituted with a substituent defined above. Specific examples thereof include C1-C2 alkoxy, C1-C3 alkoxy, C1-C4 alkoxy, C1-C5 alkoxy, C1-C6 alkoxy, C1-C7 alkoxy, C1-C8 alkoxy, C1-C9 alkoxy, C1-C10 alkoxy, C1-C11 alkoxy, C1-C20 alkoxy, C1-C2 substituted alkoxy, C1-C3 substituted alkoxy, C1-C4 substituted alkoxy, C1-C5 substituted alkoxy, C1-C6 substituted alkoxy, C1-C7 substituted alkoxy, C1-C8 substituted alkoxy, C1-C9 substituted alkoxy, C1-C10 substituted alkoxy, C1-C11 substituted alkoxy, and C1-C20 substituted alkoxy. In this regard, C1-C10 alkoxy, for example, refers to straight or branched alkoxy comprising 1 to 10 carbon atoms, such as methoxy (CH₃O-), ethoxy (C₂H₅O-), or n-propoxy (CH₃CH₂CH₂O-).

As used herein, "alkoxycarbonyl" refers to an (alkoxy)C(=O)- group, wherein alkoxy is the "alkoxy" described above.

As used herein, "aryl group" refers to a group resulting from one hydrogen atom bound to a ring of an aromatic hydrocarbon leaving. A phenyl group (C₆H₅-) is derived from benzene, a tolyl group (CH₃C₆H₄-) is derived from toluene, a xylyl group ((CH₃)₂C₆H₃-) is derived from xylene, and a naphthyl group (C₁₀H₈-) is derived from naphthalene. Examples thereof include those with 6 to 12 carbons.

As used herein, "halogen (group)" refers to a monovalent group of an element such as chlorine (Cl), bromine (Br), or Iodine (I) belonging to periodic table's group 17 (known as group 17 by the most recent definition).

As used herein, "alkylcarbonyl group" refers to a monovalent group produced by removing OH from carboxylic acid. Typical examples of an alkyl carbonyl group include acetyl (CH₃CO-), C₂H₅CO-, and the like. Examples of the number of carbons at the alkyl moiety include 1 to 6 and the like. "Substituted alkyl carbonyl group" refers to an alkylcarbonyl group with hydrogen of acyl substituted with a substituent defined above.

As used herein, "polymer" is a substance consisting of molecules that can be repeatedly linked numerous times with one another, with one or several types of atoms, or group of atoms as a constituent unit, and having a very large number of repeats of the constituent unit of the molecule without the physical property of the substance changing due to an increase or decrease of 1 or several constituent units. Examples of polymers include homopolymers and copolymers.

As used herein, "monomer" refers to a compound that can be a constituent unit of the basic structure of a macromolecule by a polymerization reaction. One type of monomer forms multiple types of constituent units in some cases. In addition, the monomer of the invention can bind to another substance via radical polymerization.

As used herein, "homopolymer" refers to a polymer obtained by polymerization using a single monomer.

As used herein, "copolymer" refers to a polymer obtained by polymerization using multiple polymers. In a representative embodiment of the invention, a copolymer may be formed by copolymerization with a monomer that is different from the monomer of the invention. Examples of monomers that are different from the monomer of the invention include (meth)acrylic acid, (meth)acrylic acid ester (e.g., methyl (meth)acrylate), (meth)acrylic acid halide, (meth)acrylate, styrene, acrylonitrile, and the like.

As used herein, "polymerization" refers to a reaction generating a macromolecular compound (polymer) from a low molecular weight compound (monomer).

As used herein, "(meth)acrylic acid" refers to acrylic acid and/or methacrylic acid.

As used herein, "acid halogenide", also referred to "acid halide", refers to a compound with an OH group contained in a carboxyl group of carboxylic acid substituted with halogen. There are four types of acid halides depending on the type of halogen, i.e., acid fluoride, acid chloride, acid bromide, and acid iodide.

As used herein, "base" refers to a substance in accordance with the Bronsted-Lowry definition, which receives a proton. Examples of "base" include salts of alkali metal and weak acid, such as alkali metal carbonates (e.g., K₂CO₃).

As used herein, "alkali metal" refers to lithium, sodium, potassium, rubidium, cesium, and francium.

As used herein, "(meth)acrylic acid" indicates acrylic acid, methacrylic acid, or both.

As used herein, "additive" refers to any substance added to a substance.

As used herein, "anti-fog agent" refers to a substance for maintaining the transparency of a material (e.g., polyacrylic acid). Transparency is typically maintained by increasing the hydrophobicity of the surface of a substance.

As used herein, "phosphorous adding agent" refers to a substance adding a phosphorous component to a substance, which is typically accomplished by binding a group comprising phosphorous to the substance. A phosphorous adding agent having a (meth)acryl group can bind a group comprising phosphorous to a compound having a radically polymerizable group by radical polymerization. A phosphorous adding agent can be used in the manufacture of a fertilizer, an agricultural chemical, a drug, an insecticide, gunpowder, an electronic material, a catalyst, a flame retardant, a metal surface treating agent, a detergent, antifreeze, a surfactant, an antifoaming agent, a lubricant, or the like.

As used herein, "radically polymerizable group" refers to any group that polymerizes by a radical reaction. Typical examples thereof include, but are not limited to, groups having an unsaturated double bond at the terminus in a substituent and the like. Examples of such radically polymerizable groups include, but are not limited to, allyl, substituted allyl, styrene, substituted styrene, acryl, substituted acryl, methacryl, substituted methacryl, and the like.

The compound of the invention encompasses salts. Examples thereof include salts of alkali metal (lithium, sodium, potassium, or the like), alkali earth metal (calcium or the like), magnesium, transition metal (zinc, iron, or the like), ammonium, organic base, and amino acid, and salts of inorganic acid (hydrochloric acid, sulfuric acid, nitric acid, hydrobromic acid, phosphoric acid, hydroiodic acid, or the like) and organic acid (acetic acid, trifluoroacetate, citric acid, lactic acid, tartaric acid, oxalic acid, maleic acid, fumaric acid, mandelic acid, glutaric acid, malic acid, benzoic acid, phthalic acid, benzenesulfonic acid, p-toluenesulfonic acid, methanesulfonic acid, ethanesulfonic acid, or the like), especially hydrochloric acid, phosphoric acid, tartaric acid, methanesulfonic acid, and the like. These salts can be formed by a commonly used method.

The compound of the invention is not limited to a specific isomer, but includes all possible isomers (keto-enol isomers, imine-enamine isomers, diastereoisomers, enantiomers, rotamers, and the like) and racemates.

One or more of hydrogen, carbon, or other atoms of the compound of the invention can be substituted with an isotope of hydrogen, carbon, or other atoms. The compound of the invention encompasses all radioactive labels of the compound of the invention. Examples of isotopes that can be incorporated into the compound of the invention include hydrogen, carbon, nitrogen, oxygen, phosphorous, sulfur, fluorine, iodine, and chlorine such as ²H, ³H, ¹¹C, ¹³C, ¹⁴C, ¹⁵N, ¹⁸O, ¹⁷O, ³¹P, ³²P, ³⁵S, ¹⁸F, ¹²³I, and ³⁶Cl, respectively.

### (Description of preferred embodiments)

Preferred embodiments of the present invention are described below. The embodiments provided below are provided to facilitate better understanding of the present invention. It is understood that the scope of the present invention should not be limited to the following descriptions. Thus, it is apparent that those skilled in the art can make appropriate modifications within the scope of the present invention by referring to the descriptions herein. It is also understood that the following embodiments of the invention can be used individually or in combination.

### <Monomers>

In one aspect, the present invention provides a compound set forth in the following general formula (I) 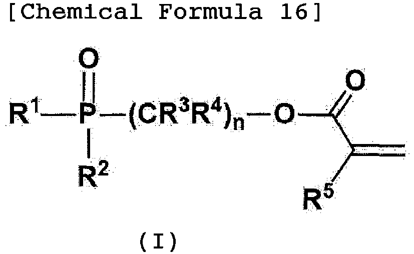 or a salt thereof, wherein
R¹ and R² are each independently a substituted or unsubstituted aryl group,
R³ and R⁴ are each independently hydrogen or a substituted or unsubstituted alkyl group,
n is 1 or 2, wherein if n is 2, each R³ may be the same or different, and each R⁴ may be the same or different, and
R⁵ is hydrogen or a substituted or unsubstituted alkyl group (hereinafter, also referred to by the abbreviation, i.e., the monomer of the invention).

The polymer made by using a (meth)acrylic acid ester derivative having a diarylphsophine oxide group of the invention has lower water absorption than polymethyl acrylate and lower water absorption than a polymer made by using a (meth)acrylic acid ester derivative having a dimethyl phosphite group. Phosphorous can be added under a condition for generating a radical, which results in a double bond moiety of (meth)acrylic acid to radically bind to another molecule or the like, so that a phosphorus containing compound can be generated.

In one embodiment, R⁵ in the monomer of the invention is hydrogen or methyl. In another embodiment, R⁵ in the monomer of the invention is hydrogen. In another embodiment, R⁵ in the monomer of the invention is methyl.

In one embodiment, n in the monomer of the invention is 1. In one embodiment, n is 2.

In one embodiment, R³ and R⁴ in the monomer of the invention are each independently hydrogen, a C1-C6 alkyl group, a C1-C5 alkyl group, a C1-C4 alkyl group, a C1-C3 alkyl group, or a C1-C2 alkyl group. In another embodiment, R³ and R⁴ in the monomer of the invention are each independently hydrogen or a methyl group. In another embodiment, at least one of R³ and R⁴ is a substituted or unsubstituted alkyl group.

In one embodiment, R¹ and R² in the monomer of the invention are each independently a phenyl group, or a phenyl group substituted with a substituent selected from the group consisting of halogen, -C1-C4 alkyl, -OC1-C4 alkyl, -OH, -NO₂, -NH₂, -C(=O)H, -C(=O)C1-C4 alkyl, and - C(=O)OC1-C4 alkyl. In another embodiment, R¹ and R² in the monomer of the invention are each independently a phenyl group, or a phenyl group substituted with a substituent selected from the group consisting of -CH₃, -OCH₃, -OH, -NO₂, -NH₂, -C(=O)H, -C(=O)CH₃, and -C(=O)OCH₃.

In one embodiment, R¹ and R² in the monomer of the invention are both phenyl groups.

The following compounds are synthesized in the present application.

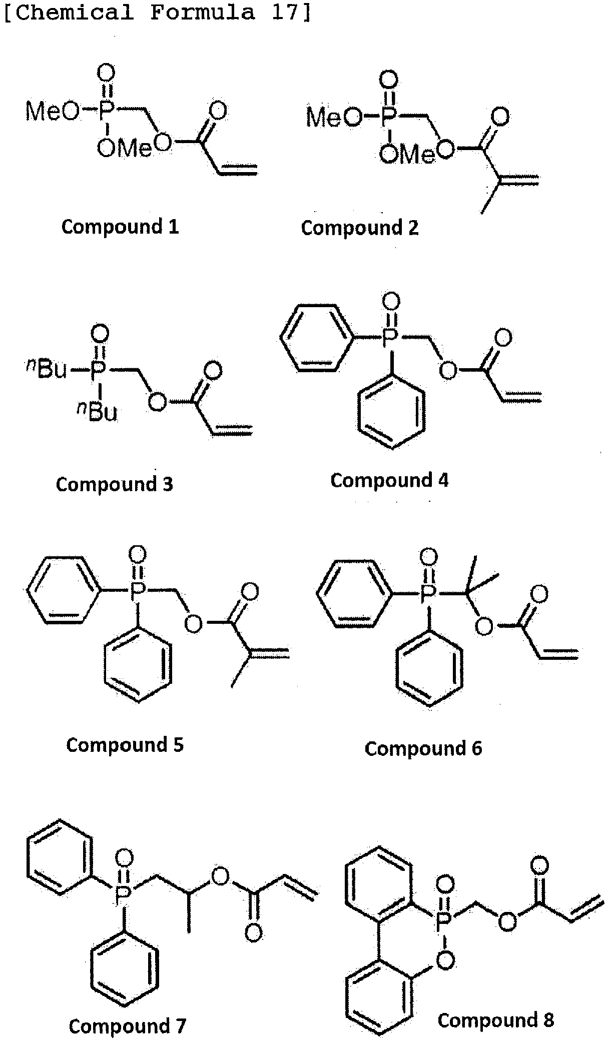

### <Polymers>

In one aspect, the present invention provides a homopolymer or a copolymer comprising, as a constituent component, the following general formula (II) 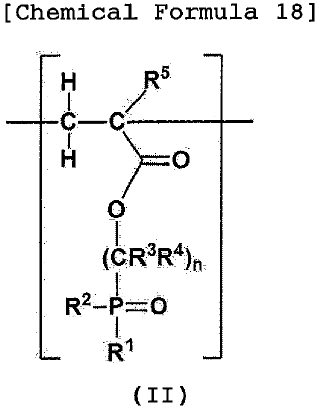 wherein
R¹ and R² are each independently a substituted or unsubstituted aryl group,
R³ and R⁴ are each independently hydrogen or a substituted or unsubstituted alkyl group,
n is 1 or 2, wherein if n is 2, each R³ may be the same or different, and each R⁴ may be the same or different, and
R⁵ is hydrogen or a substituted or unsubstituted alkyl group.

The homopolymer or copolymer can be obtained by polymerizing the compound set forth in general formula (I) or a salt thereof. The polymer having a diarylphosphine oxide group of the invention has lower water absorption than polymethyl acrylate and lower water absorption than a polymer having a dimethyl phosphite group.

In one embodiment, R⁵ in the polymer of the invention is hydrogen or methyl.

In one embodiment, n in the polymer of the invention is 1. In one embodiment, n is 2.

In one embodiment, R³ and R⁴ in the polymer of the invention are each independently hydrogen or a C1-C4 alkyl group. In another embodiment, R³ and R⁴ are each independently hydrogen or a methyl group. In another embodiment, at least one of R³ and R⁴ is a substituted or unsubstituted alkyl group.

In one embodiment, R¹ and R² in the polymer of the invention are each independently a phenyl group, or a phenyl group substituted with a substituent selected from the group consisting of halogen, -C1-C4 alkyl, -OC1-C4 alkyl, -OH, -NO₂, -NH₂, -C(=O)H, -C(=O)C1-C4 alkyl, and - C(=O)OC1-C4 alkyl. In another embodiment, R¹ and R² in the polymer of the invention are each independently a phenyl group, or a phenyl group substituted with a substituent selected from the group consisting of -CH₃, -OCH₃, -OH, -NO₂, -NH₂, -C(=O)H, -C(=O)CH₃, and -C(=O)OCH₃.

In one embodiment, R¹ and R² in the polymer of the invention are both phenyl groups.

In one embodiment, if the polymer of the invention is a copolymer, the polymer can be a copolymer copolymerized with a radically polymerizable monomer. Examples of radically polymerizable monomers include, but are not limited to, styrene and acrylic acid esters (e.g., alkyl acrylate such as methyl acrylate and ethyl acrylate, alkylstyrene such as methylstyrene and ethylstyrene, and the like). More specific examples of radically polymerizable monomers that can be used for the manufacture of the polymer of the invention include, but are not limited to, styrene, 2-methoxystyrene, 3-methoxystyrene, 4-methoxystyrene, 2-t-butoxystyrene, 3-t-butoxystyrene, 4-t-butoxystyrene, 2-chloromethylstyrene, 3-chloromethylstyrene, 4-chloromethylstyrene, 2-chlorostyrene, 3-chlorostyrene, 4-chlorostyrene, 2-bromostyrene, 3-bromostyrene, 4-bromostyrene, 2-methylstyrene, 3-methylstyrene, 4-methylstyrene, 4-t-butylstyrene; ethylene, butadiene, propylene; vinyl chloride, vinylidene chloride; vinyl acetate; acrylonitrile; N-vinyl pyrrolidone; acrylic acid, methyl acrylate, ethyl acrylate, propyl acrylate, n-butyl acrylate, t-butyl acrylate, hexyl acrylate, cyclohexyl acrylate, 2-ethylhexyl acrylate, nonyl acrylate, benzyl acrylate, lauryl acrylate, n-octyl acrylate, 2-methoxyethyl acrylate, butoxyethyl acrylate, 2-hydroxyethyl acrylate, 2-hydroxypropyl acrylate, 2-(diethylamino)ethyl acrylate, furfuryl acrylate, glycidyl acrylate; acrylamide, N, N-dimethylacrylamide; methacrylic acid, methyl methacrylate, ethyl methacrylate, allyl methacrylate, propyl methacrylate, n-butyl methacrylate, hexyl methacrylate, 2-ethylhexyl methacrylate, nonyl methacrylate, benzyl methacrylate, cyclohexyl methacrylate, lauryl methacrylate, n-octyl methacrylate, 2-methoxyethyl methacrylate, butoxyethyl methacrylate, 2-hydroxyethyl methacrylate, 2-hydroxypropyl methacrylate, 2-(diethylamino)ethyl methacrylate, furfuryl methacrylate, glycidyl methacrylate; methacrylamide; and the like. The copolymer can be a copolymer of (meth)acrylic acid, (meth)acrylic acid ester, or (meth)acrylate.

The present invention provides a method of manufacturing a monomer. Examples of such a manufacturing method include, but are not limited to, the following.

### (Method of manufacturing a compound of the invention)

### (Method 1)

An intermediate compound of R¹R²P(=O)-CR³R⁴-OH is obtained by reacting a phosphorous containing compound having one P-H bond (R¹R²P(=O)H) with aldehyde or ketone (R³C(=O)R⁴). 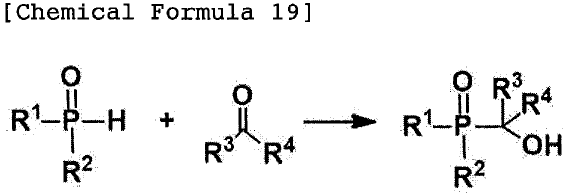 wherein R¹ and R² are each independently aryl, and R³ and R⁴ are each independently hydrogen or a substituted or unsubstituted alkyl group.

Such a reaction can be performed by heating diarylphosphine oxide and aldehyde or ketone in a solvent.

Examples of aldehyde that can be used in such a reaction include formaldehyde (methanal), acetaldehyde (ethanal), propionaldehyde (propanal), butanal, pentanal, hexanal, heptanal, octanal, nonanal, decanal, and the like. Paraformaldehyde can be used as formaldehyde.

Examples of ketone that can be used in such a reaction include acetone, methyl ethyl ketone, diethyl ketone, methyl propyl ketone, methyl isobutyl ketone, methyl amyl ketone, and the like.

Examples of solvent used in such a reaction include methanol, ethanol, acetone, methyl ethyl ketone, diethyl ether, tetrahydrofuran, dioxane, toluene, xylene, dimethyl formamide, dimethyl acetamide, and the like.

If (meth)acrylic acid chloride is reacted with the intermediate in a solvent in the presence of base, a phosphorous containing (meth)acrylic acid ester derivative is obtained.

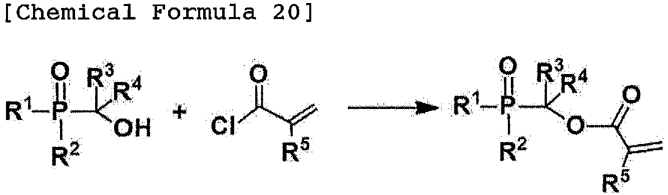

Examples of solvents that are used in such a reaction include ethyl acetate, butyl acetate, diethyl ether, tetrahydrofuran, dioxane, dichloromethane, dimethylformamide, dimethylacetamide, and the like. Acrylic acid chloride, methacrylic acid chloride, or the like can be used. Examples of base that can be used include potassium carbonate, sodium carbonate, sodium bicarbonate, cesium carbonate, trimethylamine, triethylamine, and the like.

A phosphorous containing (meth)acrylic acid ester derivative is obtained even if (meth)acrylic acid is reacted with the aforementioned intermediate compound in a solvent.

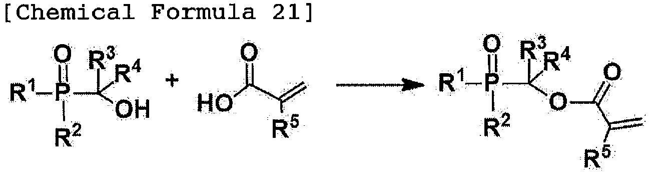

Examples of solvents that can be used in such a reaction include chloroform, dicloromethane, 1,2-dichloroethane (EDC), diethyl ether, THF, dioxane, and the like. Acrylic acid, methacrylic acid, and the like can be used.

### (Method 2)

An intermediate compound of R¹R²P(=O)-CH₂-CHR³-OH is obtained by reacting a phosphorous containing compound (R¹R²P(=O)H) having a P-H bond with epoxide (oxyrane) 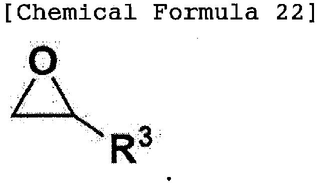 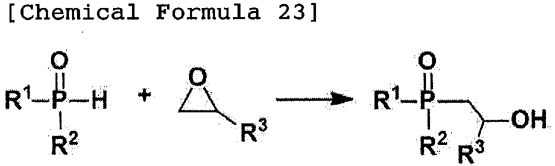 wherein R¹ and R² are each independently aryl, and R³ is hydrogen or a substituted or unsubstituted alkyl group.

If (meth)acrylic acid chloride is reacted with the intermediate compound in the presence of a base, a phosphorous containing (meth)acrylic acid ester derivative 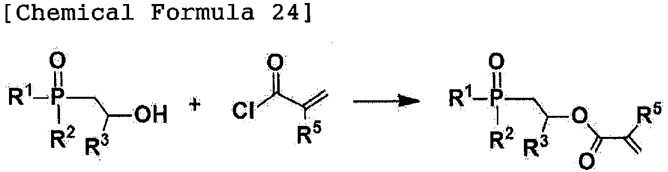 is obtained.

A phosphorous containing (meth)acrylic acid ester derivative is obtained even if (meth)acrylic acid is reacted with the intermediate compound in a solvent.

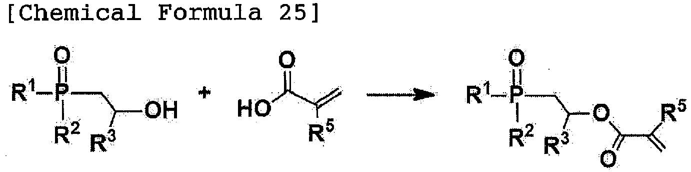

Examples of solvents that are used in such a reaction include chloroform, dicloromethane, 1,2-dichloroethane (EDC), diethyl ether, THF, dioxane, and the like. Acrylic acid, methacrylic acid, and the like can be used.

### [Method of manufacturing a polymer]

The polymer of the invention can be obtained by polymerizing the compound of the invention. Polymerization can be homopolymerization or copolymerization. Polymerization can be carried out by radical polymerization. Examples of polymerization initiators include, as an azo compound based thermal polymerization initiator, azoisobutyronitrile (AIBN), azobis dimethylvaleronitrile (ADVN), azobis methylbutyronitrile (AMBN), and the like, and as an organic peroxide based thermal polymerization initiator, dibenzoyl peroxide (BPO), t-butyl hydroperoxide (TBHP), cumene hydroperoxide, di-t-butyl hydroperoxide, and the like.

A polymer that comprises the following from compound 4 as a constituent component can be made in the present invention.

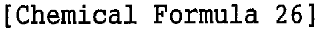

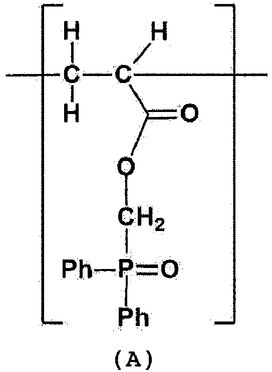

The present invention also provides a copolymer of compound 4, and methyl acrylate, methyl methacrylate, styrene, or acrylonitrile.

### (Applications)

In one aspect, the present invention provides an additive comprising the aforementioned compound of the invention or a salt thereof, or the homopolymer or copolymer of the invention. The application of an additive includes any application described herein.

The present invention provides an article comprising the aforementioned compound of the invention or a salt thereof, or the homopolymer or copolymer of the invention. Examples of such an article include an anti-fog agent, a flame retardant, an electrical/electronic component, an office appliance related component, an automobile component, a train component, an aircraft component, a fiber, a sheet, a film, acrylic glass, a polymerization additive, and a surface modifier.

The homopolymer or copolymer of the invention has low water absorption and is useful as an anti-fog agent. The compound of the invention or a salt thereof can also be used as an anti-fog agent. If the compound of the invention or a salt thereof is a solid (preferably powder), the compound can be readily handled and used at an appropriate amount. The amount of the compound wasted can be reduced more as a solid than liquid.

The compound of the invention or a salt thereof, or the homopolymer or copolymer of the invention comprises phosphorous, and can be useful as a flame retardant. If the compound of the invention or a salt thereof is a solid (preferably powder), the compound can be readily handled and used at an appropriate amount. The amount of the compound wasted can be reduced more as a solid than liquid.

The homopolymer or copolymer of the invention is flame-resistant and is useful in electrical/electronic components, office appliance related components, automobile components, train components, aircraft components, fibers, and the like.

The homopolymer or copolymer of the invention is readily moldable and transparent. Thus, the homopolymer or copolymer can be used as a sheet, film, or acrylic glass.

The compound of the invention or a salt thereof is polymerizable and capable of changing the property of a produced polymer as a polymerization additive. If the compound of the invention or a salt thereof is a solid (preferably powder), the compound can be readily handled and used at an appropriate amount. The amount of the compound wasted can be reduced more as a solid than liquid.

The compound of the invention or a salt thereof can bind to a surface of an object and change the property of the surface as a surface modifier. If the compound of the invention or a salt thereof is a solid (preferably powder), the compound can be readily handled and used at an appropriate amount. The amount of the compound wasted can be reduced more as a solid than liquid.

In one aspect, the present invention provides a phosphorous adding agent comprising the compound of the invention or a salt thereof. The phosphorous adding agent of the invention can be used in the manufacture of a fertilizer, an agricultural chemical, a drug, an insecticide, gunpowder, an electronic material, a catalyst, a flame retardant, a metal surface treating agent, a detergent, antifreeze, a surfactant, an antifoaming agent, a lubricant, and the like. If the compound of the invention or a salt thereof is a solid (preferably powder), the compound can be readily handled and used at an appropriate amount. The amount of the compound wasted can be reduced more as a solid than liquid.

The compound of the invention or a salt thereof comprises a (meth)acrylic acid moiety that can readily radically polymerize, and is capable of readily adding phosphorous to another substance. Phosphorous can be added to anything that can react with a radical generated at a (meth)acrylic acid moiety. The compound of the invention or a salt thereof has an effect of reducing water absorption rate, and is therefore useful in producing a compound with low water absorption. If the compound of the invention or a salt thereof is a solid (preferably powder), the compound can be readily handled and used at an appropriate amount. The amount of the compound wasted can be reduced more as a solid than liquid.

In one aspect, the present invention provides a method of treating a surface using the compound of the invention or a salt thereof. Such a method of treating a surface can reduce the water absorption of the surface. The method can comprise polymerizing the compound or a salt set forth in general formula (I) with the surface. If the compound of the invention or a salt thereof is a solid (preferably powder), the compound can be readily handled and used at an appropriate amount. The amount of the compound wasted can be reduced more as a solid than liquid.

Reference literatures such as scientific literatures, patents, and patent applications cited herein are incorporated herein by reference to the same extent that the entirety of each document is specifically described.

The present invention has been described above while showing preferred embodiments to facilitate the understanding. While the present invention is described hereinafter based on Examples, the above descriptions and the following Examples are not provided to limit the present invention, but for the sole purpose of exemplification. Thus, the scope of the present invention is not limited to the embodiments and Examples specifically described herein and is limited only by the scope of claims.

### [Examples]

While the present invention is described more specifically with the following Examples and Comparative Examples, such Examples should not limit the interpretation of the present invention. Examples obtained by appropriately combining the technical means disclosed in each Example are also within the scope of the present invention.

The abbreviation used herein represents the following.
- AN:: acrylonitrile
- GC-MS:: gas chromatography-mass spectrometry
- MA:: methyl acrylate
- MMA:: methyl methacrylate
- NMR:: nuclear magnetic resonance
- PMA:: polymethyl acrylate
- Ph:: phenyl
- rt:: room temperature (e.g., 15°C to 25°C)
- St:: styrene
- THF:: tetrahydrofuran

The compound of the invention and synthesis thereof are further described with the following Examples. While the following Examples are provided to further define the present invention, the present invention is not limited to the features of the Examples. Specific examples use generic names, which are understood to be recognized by those skilled in the art.

Proton nuclear magnetic resonance (¹H NMR) spectra were recorded with JNM-ECX FT NMR system (JEOL) or JNM-ECS FT NMR system (JEOL) (400 MHz) using deuterated chloroform as a measurement solvent. The phosphorous nuclear magnetic resonance (³¹P NMR) spectra were recorded with JNM-ECX FT NMR system (JEOL) or JNM-ECS FT NMR system (JEOL) (162 MHz) using deuterated chloroform as a measurement solvent. The chemical shift is indicated by parts per million (ppm), and residual solvent signals were used as the baseline. The following abbreviations for NMR are used: s = signlet, d = doublet, dd = double doublet, and m = multiplet.

220-MS (Varian) was used to obtain GC spectra and GC-MS spectra under the following conditions: initial temperature of 50°C, retention time of 2 minutes, rate of increase in temperature of 20°C/min, final temperature of 250°C, retention time of 10 minutes, column flow rate that is pressure regulated (22.3 psi), and column used, which was DB-5 (Agilent Technologies; length 30 m, inner diameter 0.25 mm, and film thickness 0.25 µm). Electron ionization was used for the measurement.

For solvents and other general solvents, First Grade (Sigma-Aldrich Japan) was used.

Diphenylphosphine oxide (Katayama Chemical) and dibutylphosphine oxide (Yantai Gem Chemicals Co. Ltd) were used as the phosphorous based compounds. For other phosphorous compounds, commercially available products were used.

### <Study on monomer compounds>

### (Comparative Example 1: Synthesis of (meth)acrylic acid ester derivative (compound 1))

### (Step 1: Synthesis of intermediate)

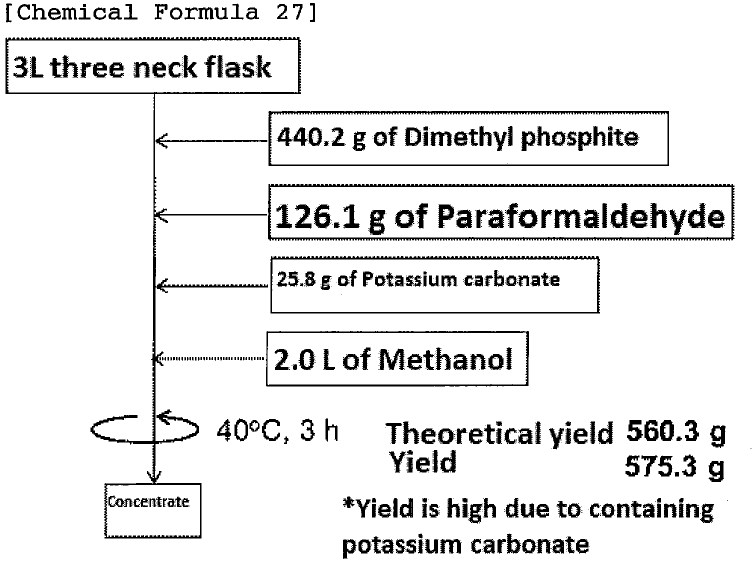

440.2 g of dimethyl phosphite, 126.1 g of paraformaldehyde, 25.8 g of potassium carbonate, and 2.0 L of methanol were added to a reaction vessel (3L three neck flask). After heating and stirring for 3 hours at 40°C, the reaction solution was concentrated to obtain 575.3 g of colorless, transparent, and viscous liquid. While the yield exceeded 100%, it is understood that this is because of increase yield due to the generated product comprising potassium carbonate.

### (Step 2. Reaction with acrylic acid chloride)

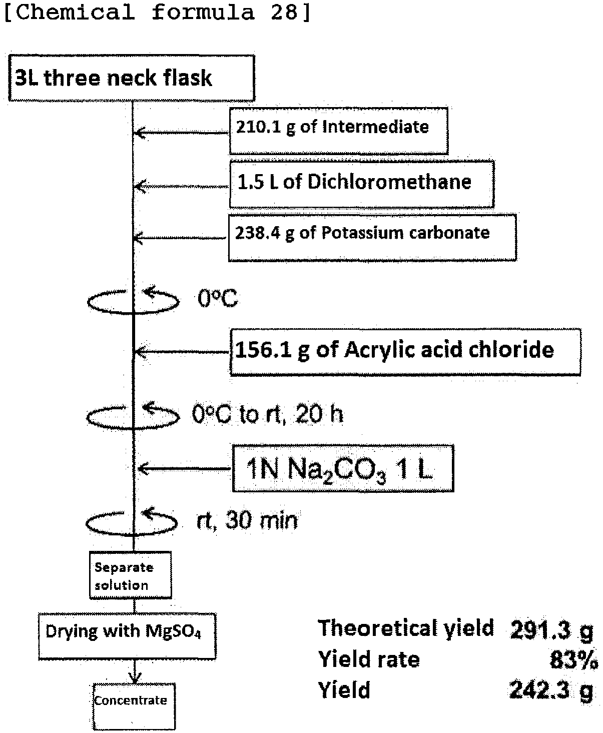

210.1 g of the intermediate of compound 1 in step 1 was dissolved in 1.5 L of dichloromethane, and 238.4 g of potassium carbonate was added to the reaction vessel (3L three neck flask). 156.1 g of acrylic acid chloride was dripped in while cooling the reaction vessel with ice to 0°C. The reaction vessel was reacted for 20 hours with natural increase in the temperature (0°C to room temperature). After the end of the reaction, 1L of 1N sodium carbonate was added and stirred for 30 minutes at room temperature, and then the solution was separated to retrieve an organic layer. The organic layer was dried with magnesium sulfate, then concentrated, and vacuum dried to obtain 242.3 g of (meth)acrylic acid ester derivative of interest (compound 1) (yield of 83%). The product of interest was studied by NMR and MS measurement.
¹H NMR (400 MHz, CDCl₃) δ 6.5 (dd, 1H), 6.2 (dd, 1H), 5.9 (dd, 1H), 4.5 (d, 2H), 3.8 (d, 6H).
³¹P NMR (162 MHz, CDCl₃) δ 22.1.

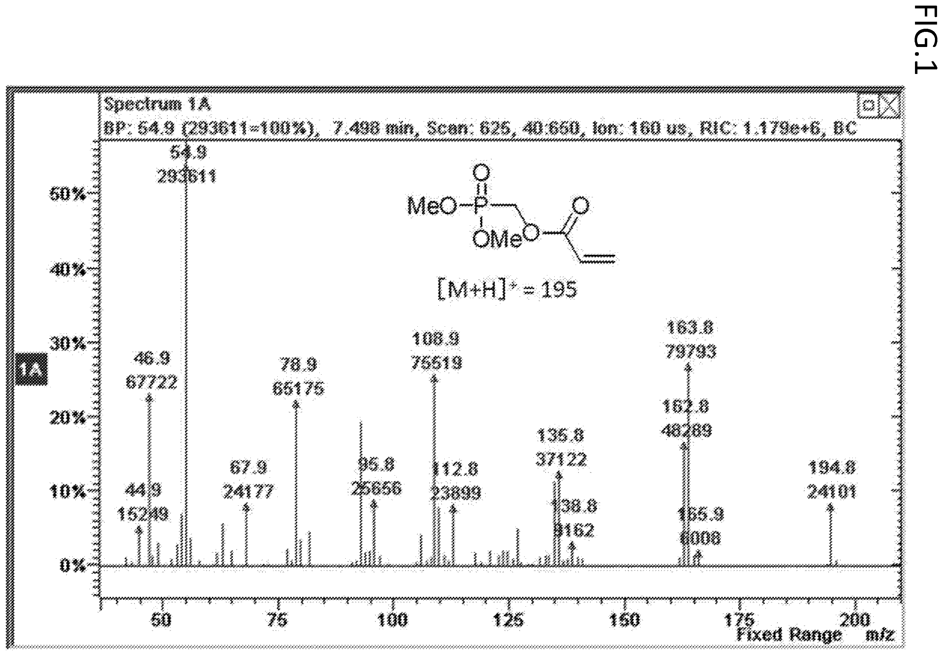

The substance of interest (compound 1) was detected at [M+H]⁺ = 195 with one proton in MS measurement (Figure 1).
m/z = 195 [M+H]⁺ (parent peak)
m/z = 164, 136, 109, 79, 55 (fragment)

### (Comparative Example 2: Synthesis of (meth)acrylic acid ester derivative (compound 2))

### (Step 1. Synthesis of intermediate)

An intermediate was obtained using the same procedure as step 1 of Comparative Example 1.

### (Step 2. Reaction with methacrylic acid chloride)

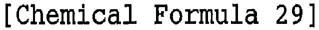

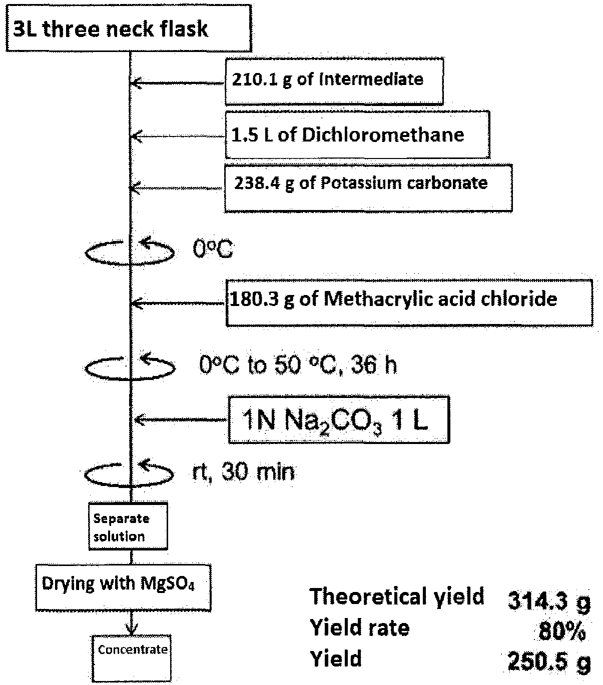

250.5 g of colorless, transparent, and viscous liquid was obtained using the same procedure as step 2 of Comparative Example 1, other than using 180.3 g of methacrylic acid chloride instead of 156.1 g of acrylic acid chloride and increasing the reaction temperature, after natural increase in temperature of the reaction vessel, to 50°C and allowing a reaction to take place for a total of 36 hours (yield of 80%). The product of interest was studied by NMR and MS measurement.
¹H NMR (400 MHz, CDCl₃) δ 6.2 (d, 1H), 5.7 (d, 1H), 4.5 (d, 2H), 3.9 (d, 6H), 2.0 (s, 3H).

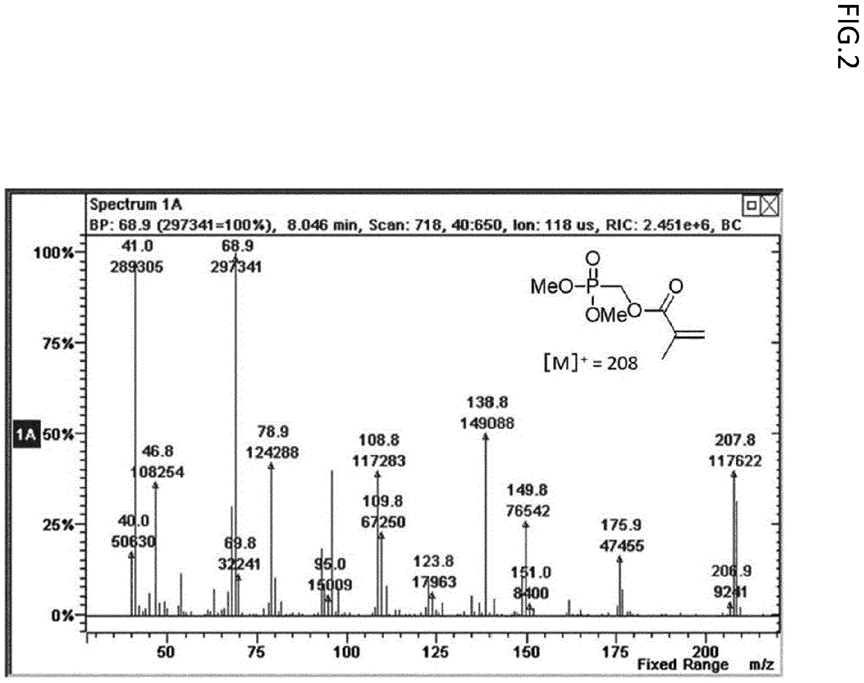

The substance of interest (compound 2) was detected at [M]⁺ = 208 in MS measurement (Figure 2).
m/z = 208 [M]⁺ (parent peak)
m/z = 176, 150, 139, 109, 79, 69, 41 (fragment)

### (Comparative Example 3: Synthesis of (meth)acrylic acid ester derivative (compound 3))

### (Step 1. Synthesis of intermediate)

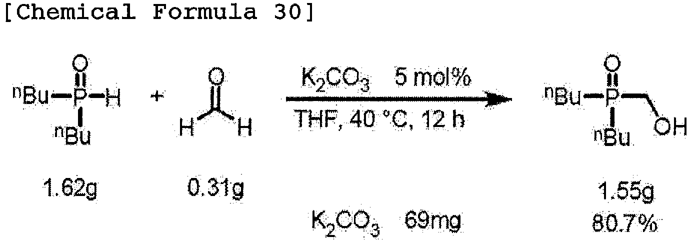

1.62 g of dibutylphosphine oxide, 0.31 g of paraformaldehyde, and 10 mL of THF were added to a vial, and 69 mg of potassium carbonate was added. After heating and stirring for 12 hours at 40°C, the mixture was separated with ethyl acetate/water, and the organic layer was concentrated and dried. As a result, 1.55 g of colorless transparent liquid was obtained (yield of 80.7%).

### (Step 2. Reaction with acrylic acid chloride)

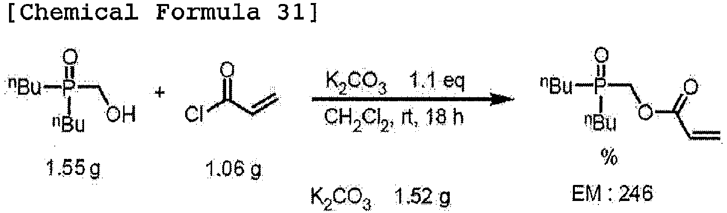

### (EM = Exact Mass)

The intermediate obtained in step 1 was dissolved in 10 mL of dichloromethane, and 1.52 g of potassium carbonate was added. The inside of the vessel was replaced with nitrogen. While stirring at room temperature, 1.06 g of acrylic acid chloride was added and stirred for 18 hours. The resulting reaction mixture was separated with dichloromethane/water to retrieve the organic layer. After concentrating and drying the organic layer, production of the substance of interest was confirmed by GC-MS measurement.

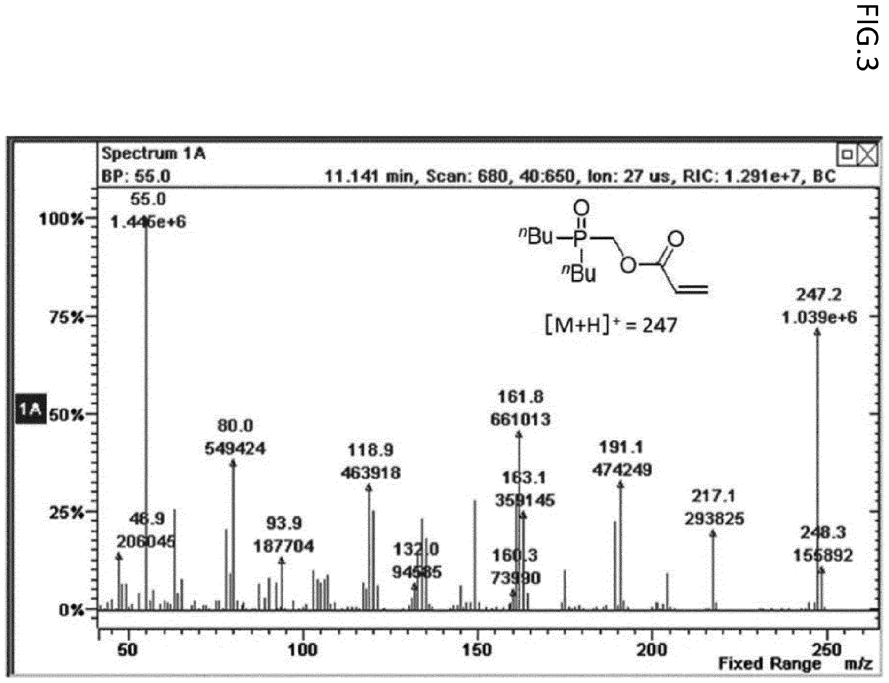

The substance of interest (compound 3) was detected at [M+H]⁺ = 247 with one proton in MS measurement (Figure 3).
m/z = 247 [M+H]⁺ (parent peak)
m/z = 217, 191, 162, 119, 80, 55 (fragment)

### (Example 1: Synthesis of (meth)acrylic acid derivative (compound 4))

### (Step 1. Synthesis of intermediate)

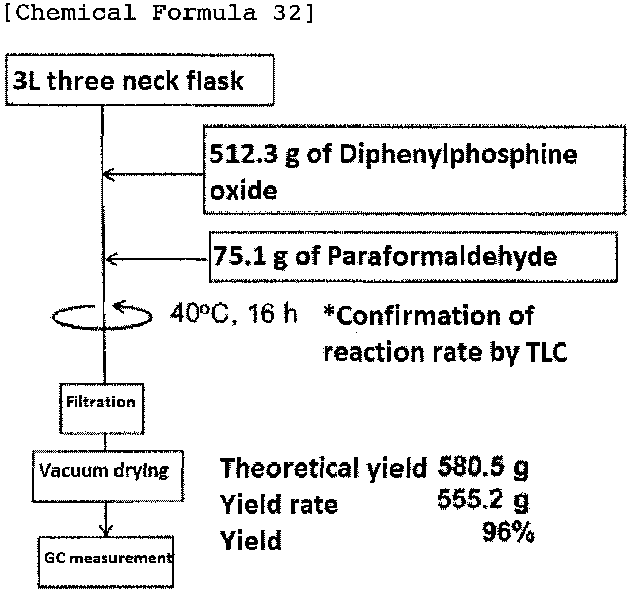

512.3 g of diphenylphosphine oxide, 75.1 g of paraformaldehyde, and 1 L of THF were added to the reaction vessel (3L three neck flask). The mixture was heated and stirred for 16 hours at 40°C. The progress of the reaction (reaction rate) was confirmed by TLC. After confirming that the reaction had progressed, the mixture was allowed to cool to allow crystals to be deposited. The crystals were retrieved by suction filtration and vacuum dried to obtain 555.2 g of intermediate (yield of 96%). The product of interest was confirmed by GC measurement.

### (Step 2. Reaction with acrylic acid chloride)

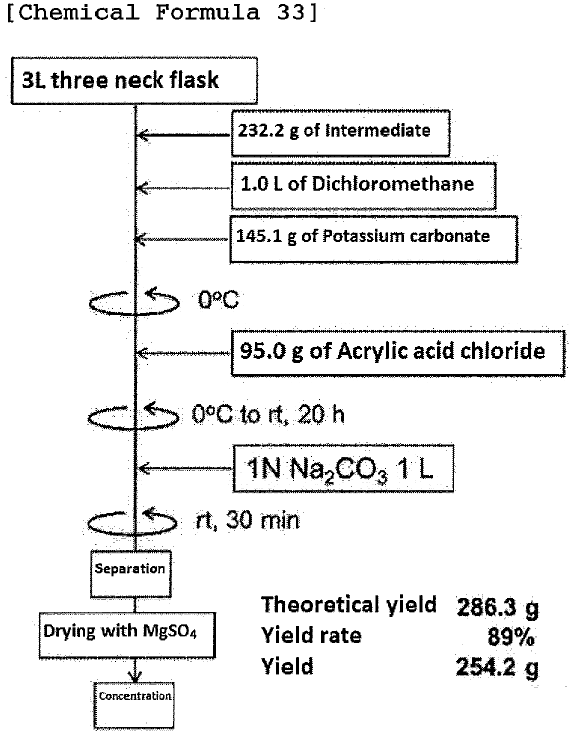

232.2 g of intermediate of compound 4 in step 1 was dissolved in 1.0 L of dichloromethane, and 145.1 g of potassium carbonate was added to the reaction vessel (3L three neck flask). 95.0 g of acrylic acid chloride was dripped in over one hour while cooling the reaction vessel with ice to 0°C. The reaction vessel was reacted for 20 hours with the natural increase in the temperature (0°C to room temperature). After the completion of the reaction, 1L of 1N sodium carbonate was added and stirred for 30 minutes at room temperature, and then the solution was separated to retrieve an organic layer. The organic layer was dried with magnesium sulfate, then concentrated, and vacuum dried to obtain 254.2 g of solid (meth)acrylic acid ester derivative (compound 4) of interest (yield of 89%). The product of interest was confirmed by NMR and MS measurement.
¹H NMR (400 MHz, CDCl₃) δ 7.7-7.9 (m, 4H), 7.4-7.6 (m, 6H), 6.3 (dd, 1H), 6.1 (dd, 1H), 5.8 (dd, 1H), 5.0 (d, 2H). ³¹P NMR (162 MHz, CDCl₃) δ 27.9.

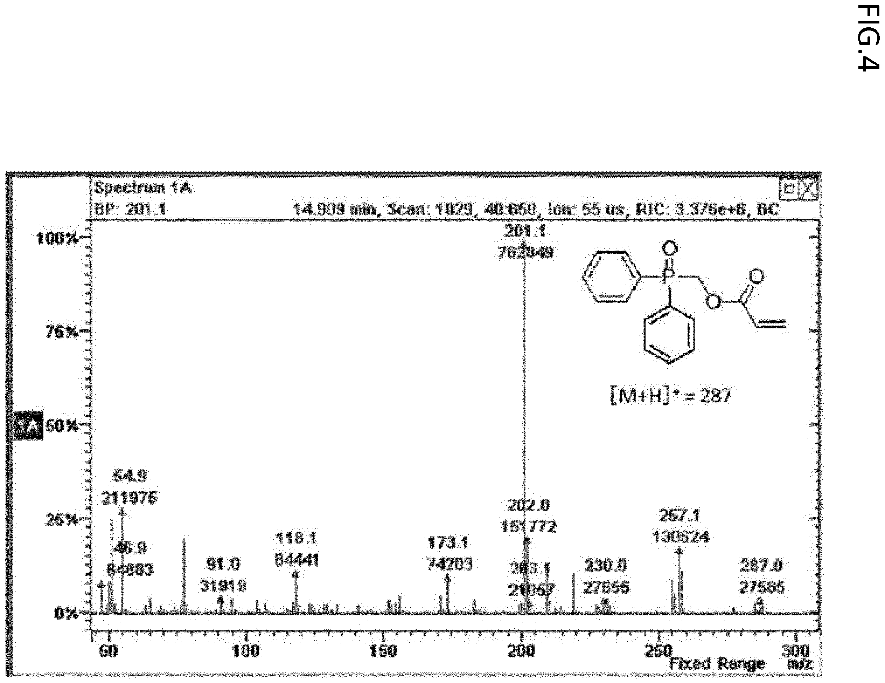

The substance of interest (compound 4) was detected at [M+H]⁺ = 287 with one proton in MS measurement (Figure 4).
m/z = 287 [M+H]⁺ (parent peak)
m/z = 257, 201, 173, 118, 77, 55 (fragment)

### (Example 2: Synthesis of (meth)acrylic acid ester derivative (compound 5))

### (Step 1. Synthesis of intermediate)

An intermediate was obtained using the same procedure as step 1 in Example 1.

### (Step 2. Reaction with methacrylic acid chloride)

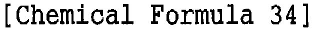

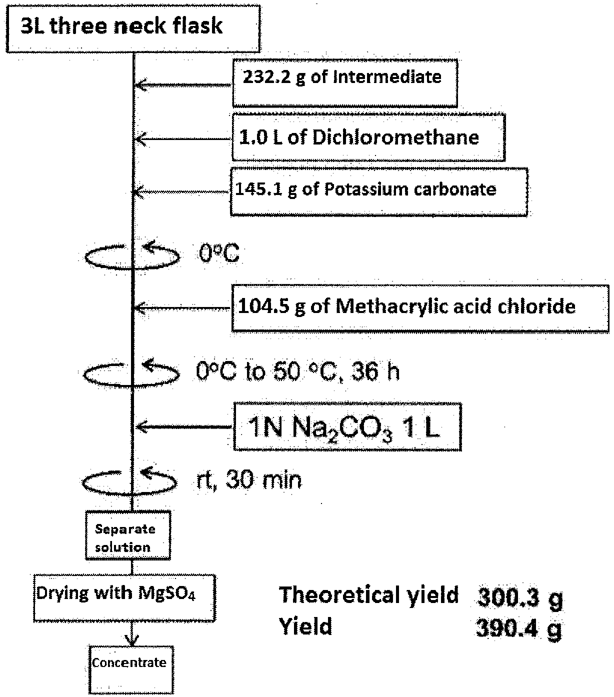

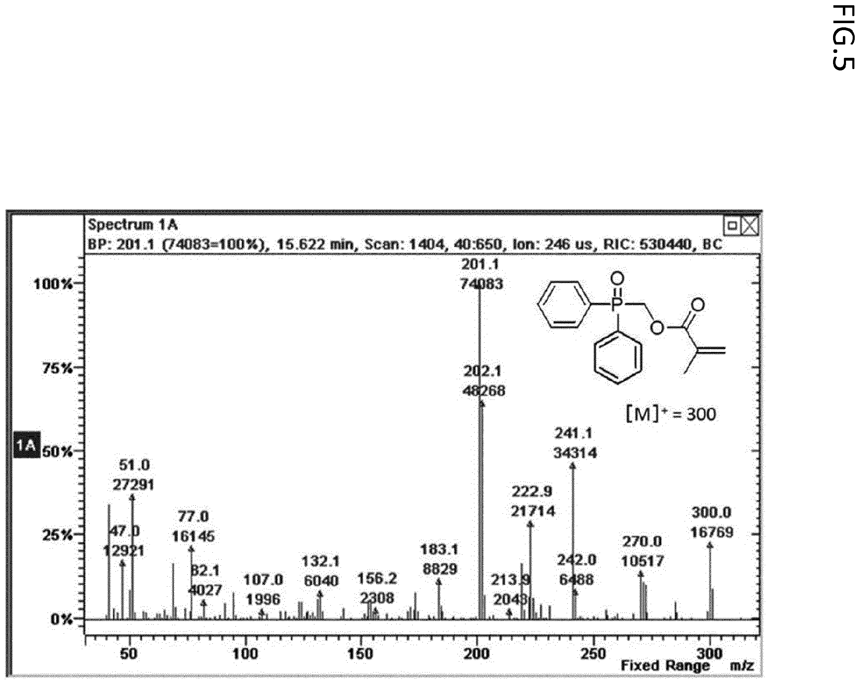

390.4 g of (meth)acrylic acid ester derivative of interest (compound 5) was obtained as a colorless, transparent, and viscous liquid by a reaction using the same procedure as step 2 of Example 1, other than using 104.5 g of methacrylic acid chloride instead of 95.0 g of acrylic acid chloride and increasing the reaction temperature, after natural increase in temperature of the reaction vessel, to 50° C and allowing a reaction to take place for a total of 36 hours instead of 20 hours of natural increase in temperature (0°C to room temperature). While the yield exceeded 100%, this is understood to be due to an effect of byproducts. The product of interest was confirmed by NMR and MS measurement (see Figure 5). Compound 5 was a white solid powder at normal temperature and normal pressure when isolated as a pure substance.
¹H NMR (400 MHz, CDCl₃) δ 7.8-8.0 (m, 4H), 7.4-7.6 (m, 6H), 6.0 (d, 1H), 5.5 (d, 1H), 5.0 (d, 2H), 1.8 (s, 3H).

The substance of interest (compound 5) was detected at [M]⁺ = 300 in MS measurement (Figure 5).
m/z = 300 [M]⁺ (parent peak)
m/z = 270, 241, 223, 201, 183, 132, 77 (fragment)

### (Example 3: Synthesis of (meth)acrylic acid ester derivative (compound 6))

### (Step 1. Synthesis of intermediate)

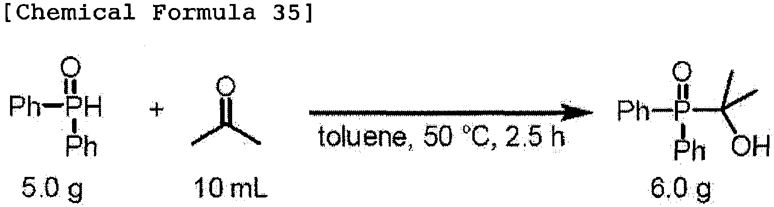

5.0 g of diphenylphosphine oxide, 10 mL of acetone, and 5 mL of toluene were placed in a vial, and heated and stirred for 2.5 hours at 50°C. The deposited crystals were retrieved by suction filtration, and then dried to obtain 6.0 g of white solid intermediate.

### (Step 2. Reaction with acrylic acid)

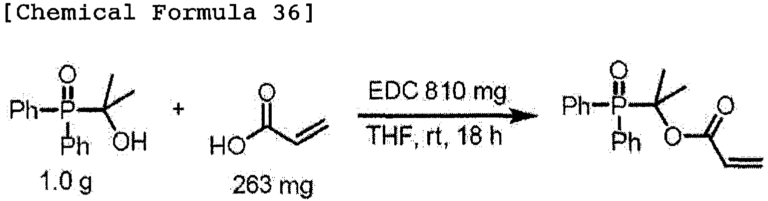

The inside of the reaction vessel was replaced with nitrogen. Under a nitrogen stream, 1.0 g of intermediate, 4 mL of THF, 263.4 mg of acrylic acid, and 810.2 mg of 1-ethyl-3-(3-dimethylamino propyl) carboxydiamide (EDC) were added in order, and then stirred for 18 hours at room temperature. Generation of the substance of interest was confirmed by GC-MS measurement of the reaction solution.

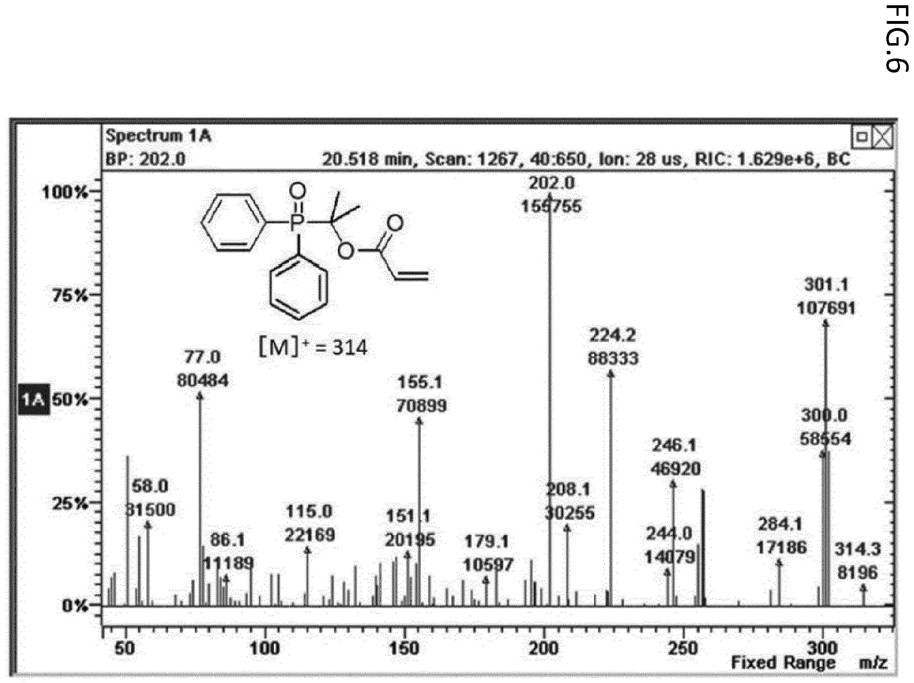

The substance of interest (compound 6) was detected at [M]⁺ = 314 in MS measurement (Figure 6).
m/z = 314 [M]⁺ (parent peak)
m/z = 301, 258, 224, 202, 155, 77 (fragment)

Compound 6 was a solid at normal temperature and normal pressure when isolated as a pure substance.

### (Example 4: Synthesis of (meth)acrylic acid ester derivative (compound 7))

### (Step 1. Synthesis of intermediate)

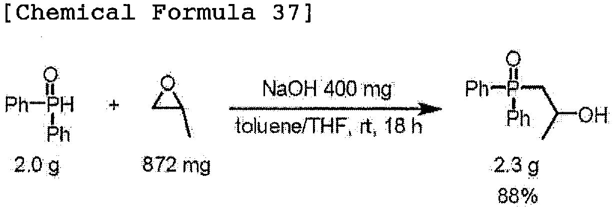

The inside of the reaction vessel was replaced with nitrogen. 2.0 g of diphenylphosphine oxide was added and dissolved into 2 mL of toluene and 10 mL of THF. After adding 400 mg of sodium hydroxide and stirring for 20 minutes at room temperature, 872 mg of propylene oxide was added and stirred for another 18 hours at room temperature. The resulting reaction mixture was separated with toluene/water to retrieve the organic layer. The organic layer was dried with MgSo₄ and then concentrated and dried to obtain 2.3 g of intermediate (yield of 88%).

### (Step 2. Reaction with acrylic acid chloride)

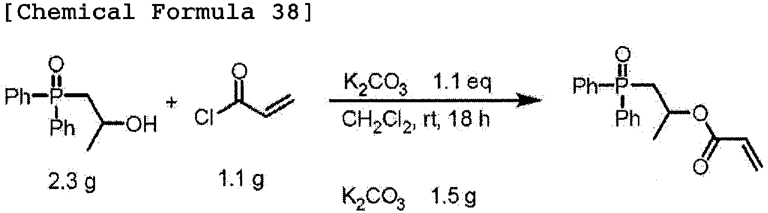

The resulting intermediate was dissolved in 10 mL of dichloromethane, and 1.52 g of potassium carbonate was added. The inside of the vessel was replaced with nitrogen, and 1.06 g of acrylic acid chloride was added while stirring at room temperature, and the mixture was stirred for 18 hours. The resulting reaction mixture was separated with dichloromethane/water to retrieve the organic layer. After concentrating and drying the organic layer, the product of interest was confirmed by GC-MS measurement.

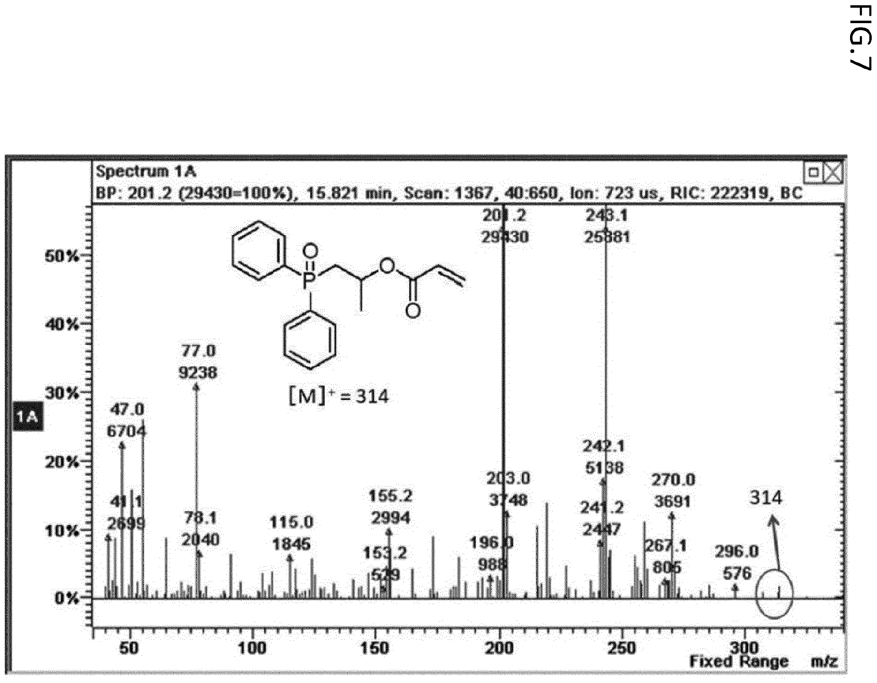

The substance of interest (compound 7) was detected at [M]⁺ = 314 in MS measurement (Figure 7). *Peak at 314 can be observed if expanded.
m/z = 314 [M]⁺ (parent peak)
m/z = 270, 243, 201, 155, 77 (fragment)

Compound 7 was a solid at normal temperature and normal pressure when isolated as a pure substance.

### (Comparative Example 4: Synthesis of (meth)acrylic acid ester derivative (compound 8))

An acrylic acid ester derivative (compound 8) with an HCA backbone was synthesized by the same methodology as compounds 1 and 4.

### (Step 1. Synthesis of intermediate)

After adding 216 g of HCA and 400 mL of toluene to the reaction vessel, a Dean-Stark apparatus was installed to the reaction vessel. HCA was dissolved by heating to 90°C, and 31.5 g of paraformaldehyde was added over 2 hours. After the completion of addition, the mixture was heated to reflux for 18 hours under toluene reflux conditions. The reaction solution was allowed to cool to room temperature. The deposited white solid was retrieved by suction filtration.

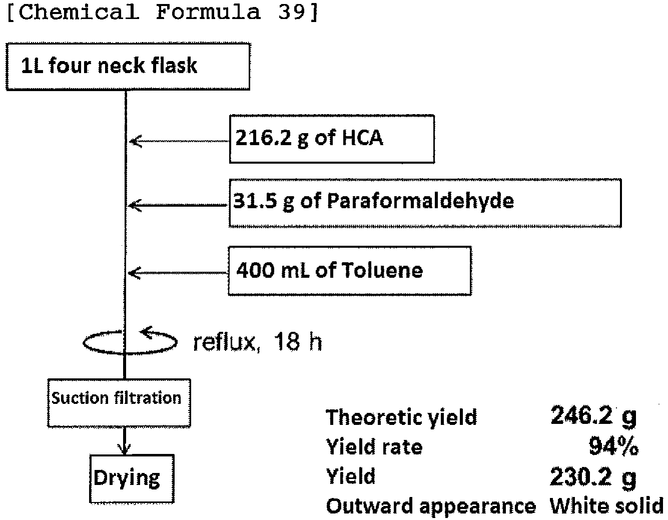

### (Step 2. Reaction with acrylic acid chloride)

230 g of intermediate of compound 8, 1.0 L of dichloromethane, and 152.0 g of potassium carbonate were added. 115.0 g of acrylic acid chloride was dripped in while cooling the reaction vessel with ice. The reaction vessel was reacted for 3 hours by natural increase in temperature, and then reacted for 30 hours at 50° C. After the completion of the reaction, 1 L of 1N sodium carbonate was added and stirred for 1 hour, and a solid was removed by suction filtration to retrieve an organic layer. The organic layer was dried with magnesium sulfate, concentrated, and vacuum dried to obtain 109.6 g of transparent and viscous liquid.

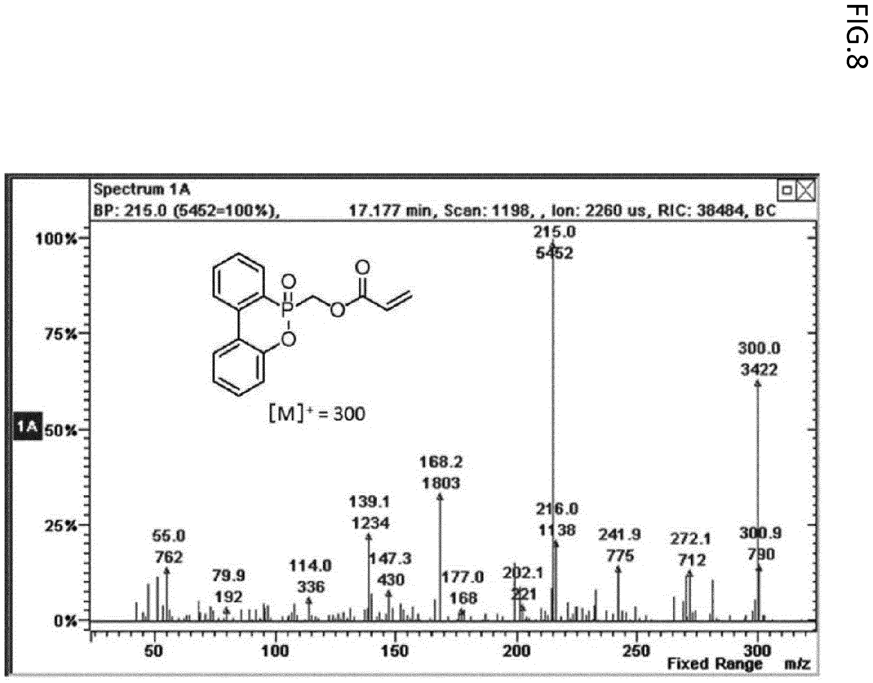

Generation of compound 8 was confirmed by GC-MS measurement (Figure 8).

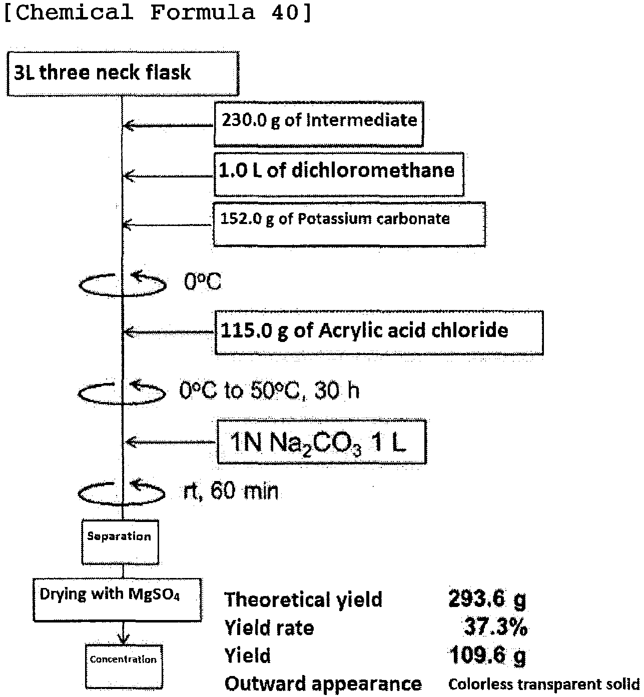

The substance of interest (compound 8) was detected at [M]⁺ = 300 with one proton.
m/z = 300 [M]⁺ (parent peak)
m/z = 215, 199, 168 (fragment)

### <Study on polymers>

### (Example 5: Homopolymer synthesis)

For homopolymer synthesis, (meth)acrylic acid ester derivatives (compounds 1 and 4) were used for the study. To show polymerization, the molecular weight was also measured by GPC.

### (Experimental method)

Compound 1 and compound 4 were measured out into a 2 g test tube, and 60 mg of AIBN (3 wt%) was added as a radical initiator.

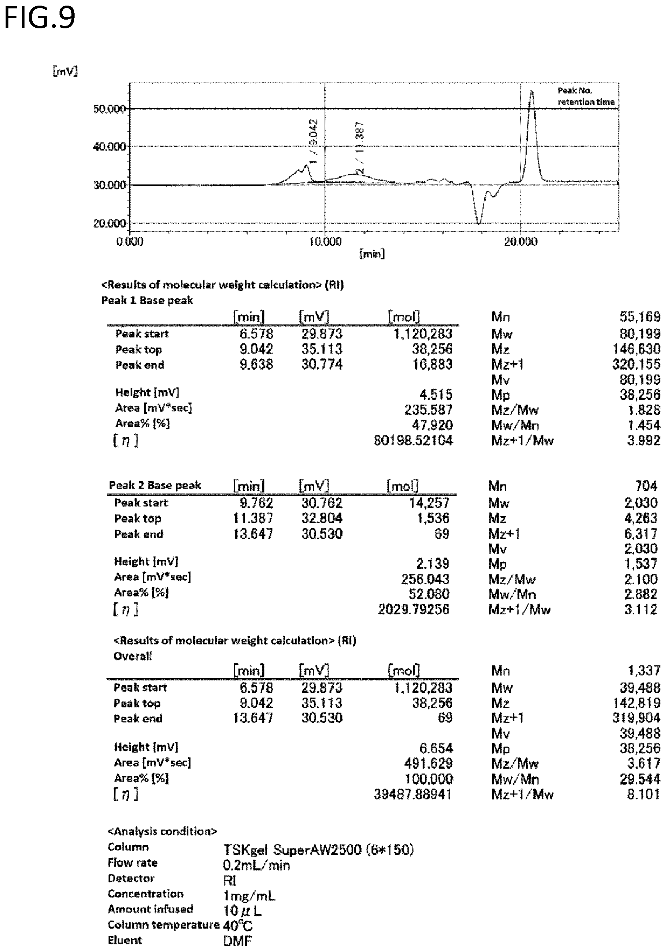

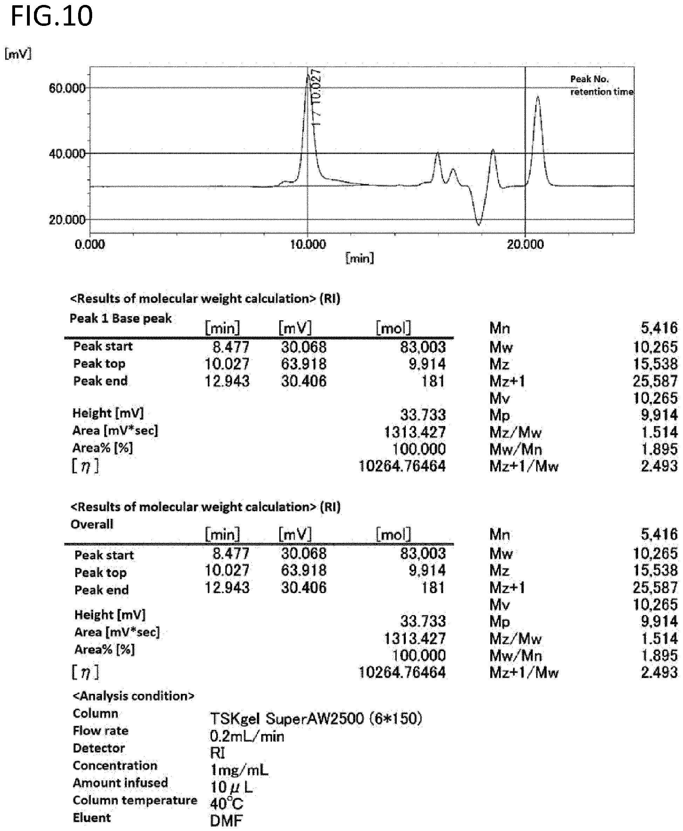

After completely dissolving AIBN into a monomer, the mixture was heated to 80°C and reacted for 10 minutes. The mixture exhibited intense foaming and generated a rubberlike polymer. Figures **9** and **10** show the results of GPC.

**[Table 1]**

| Monomer | Amount used | AIBN | Reaction temperature | Outer appearance | Mn | Mw | Mw/Mn |
|---|---|---|---|---|---|---|---|
| AA1 | 2 g | 60 mg | 80° C | Yellow rubberlike solid | 1,337 | 39,488 | 29.544 |
| AA28 | 2 g | 60 mg | 80°C | Yellow rubberlike solid | 5,416 | 10,265 | 1.895 |

### (Example 6: Copolymer synthesis)

Compound 1, compound 4, and various monomers were used to synthesize a copolymer. To show that the compound was polymerized, the average molecular weight was also measured by GPC. Next, to show that some of the copolymers contain a phosphorous element, the phosphorous element was tested quantitatively and qualitatively by ICP optical emission spectrometry. A test on the water absorption of the synthesized copolymers (copolymers 2 and 3) was also conducted.

### (Polymerization method)

As specified in the following table, a monomer and a polymerization inhibitor were added to the reaction vessel and completely dissolved into 21 mL of methyl ethyl ketone. The inside of the vessel was replaced with nitrogen, and heated and stirring for 6 hours at 70°C. The reaction solution was dripped into hexane, reprecipitated, and dried to obtain a copolymer.

The following monomers were used.

- MA: methyl acrylate
- MMA: methyl methacrylate
- St: styrene
- AN: acrylonitrile

### (Molecular weight measurement method) (GPC)

A polymer was dissolved into DMF so that it would be 1 mg/mL. The molecular weight was measured under the following measurement conditions.

**[Table 2]**

| | | | |
|---|---|---|---|
| Model No. | TOSOH HLC-8320GPC | | |
| Column | TSKgel SuperAW2500 (6*150) | | |
| Flow rate | 0.2 mL/min | | |
| Detector | Differential refractometer | | |
| Concentration | 1 mg/mL | | |
| Amount infused | 10 µL | | |
| Column temperature | 40° C | | |
| Eluent | DMF | | |
| Molecular weight standard | PEG | | |

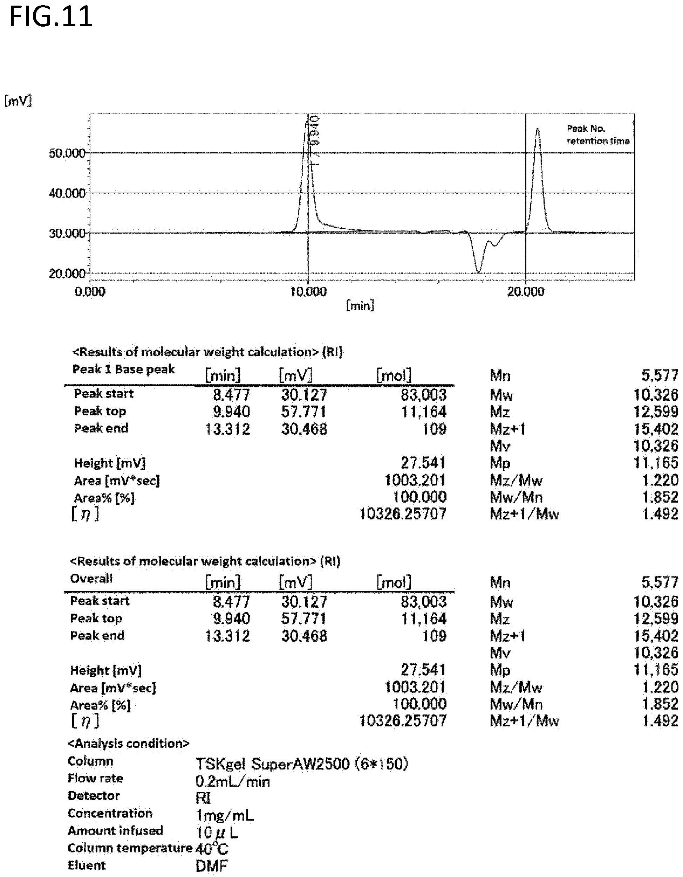

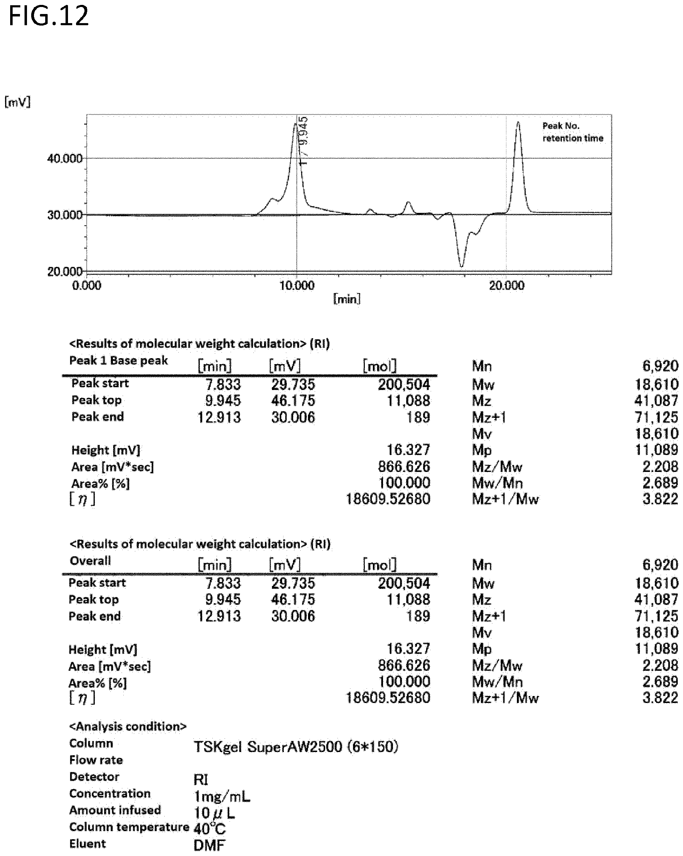

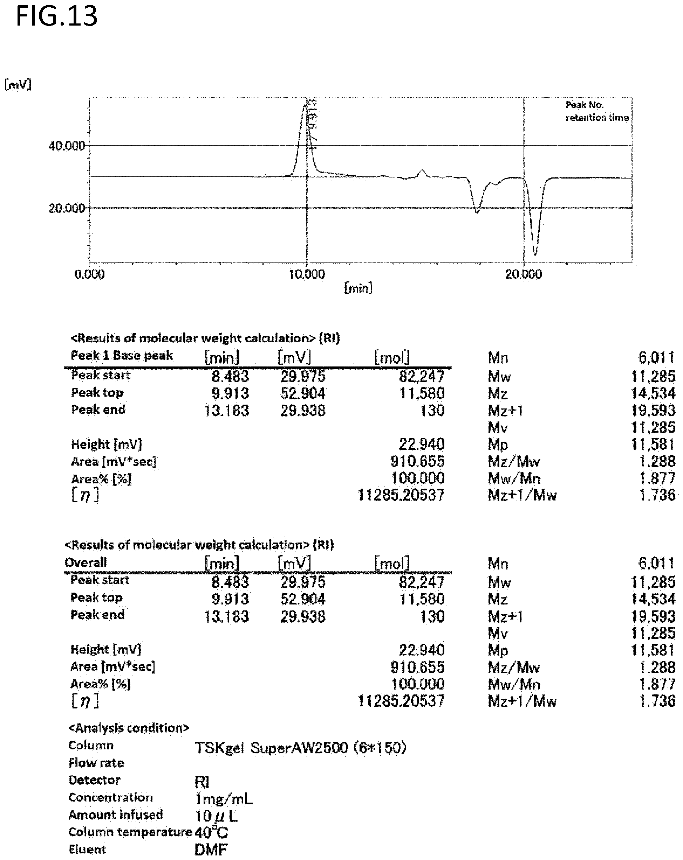

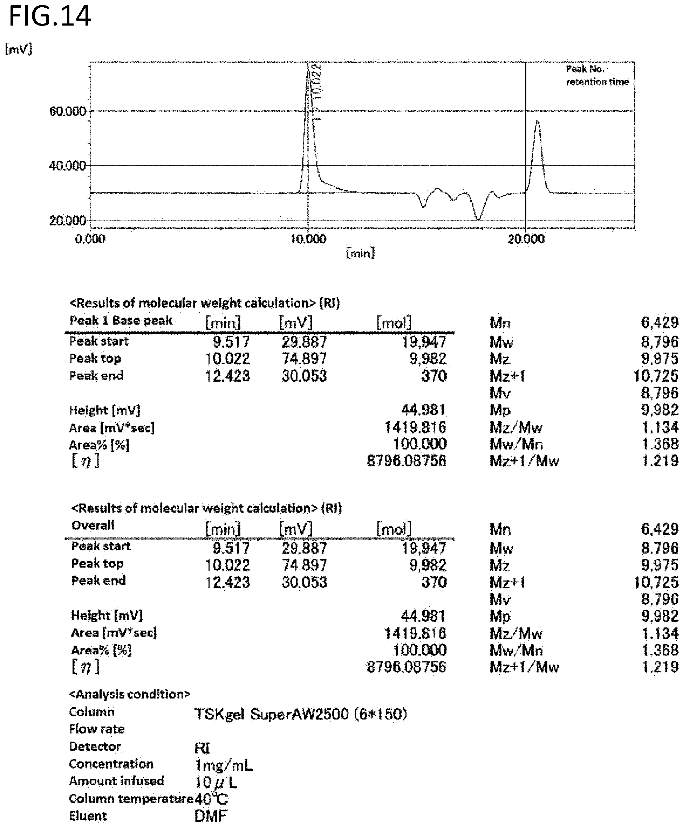

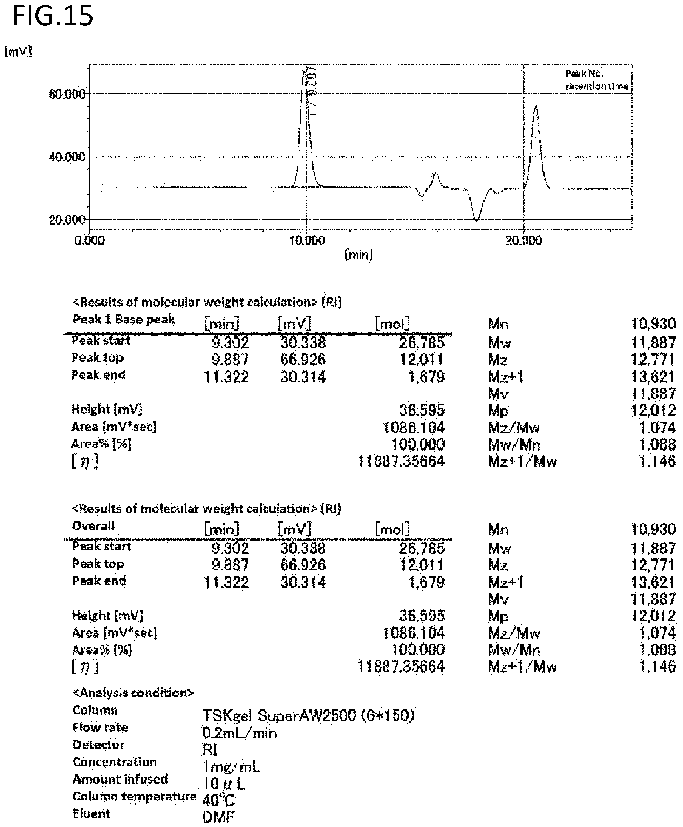

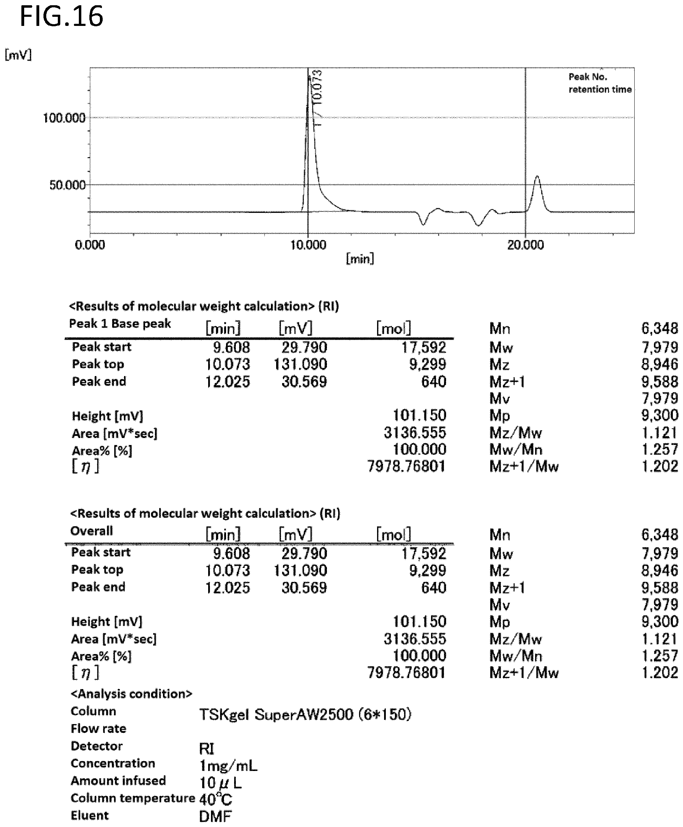

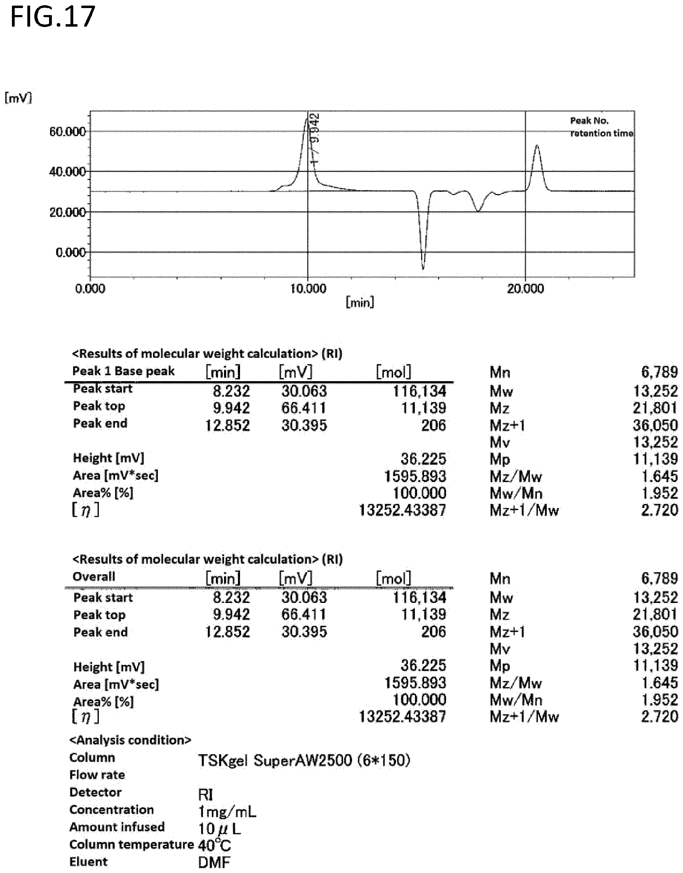

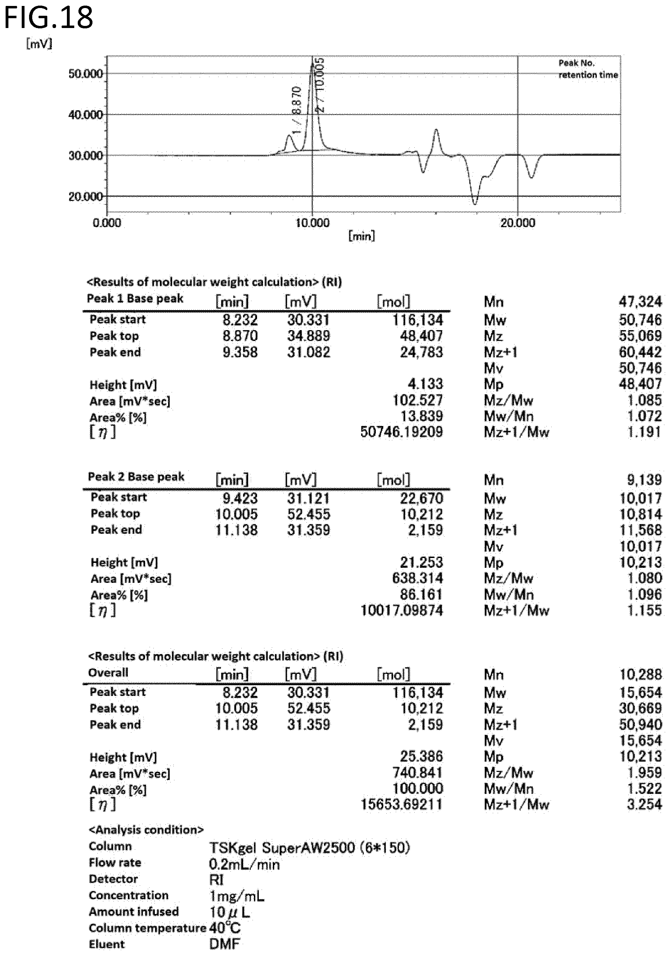

The measurement revealed that polymerization progressed in each case. Various molecular weights are in the following table. Figures **11-18** show the results of GPC.

**[Table 3]**

| | Monomer | | AIBN | Yield | Mn | Mw | Mw/Mn | Phosphorous content |
|---|---|---|---|---|---|---|---|---|
| (1) | MA 9.1 g | - | 174 mg | 8.3 g | 5,577 | 10,326 | 1.852 | - |
| (2) | MA 7g | Compound 1 2.1 g | 174 mg | 7.4 g | 6,920 | 18,610 | 2.689 | 2.9% (3.7%)* |
| (3) | MA 7g | Compound 4 2.1 g | 174 mg | 6.1 g | 6,011 | 11,285 | 1.877 | 2.1% (2.5%)* |
| (4) | MMA 7g | Compound 4 2.1 g | 127 mg | 9.0 g | 6,429 | 8,796 | 1.368 | - |
| (5) | MMA 7g | Compound 4 2.1 g | 13 mg | 8.4 g | 10,930 | 11,887 | 1.088 | - |
| (6) | St 7g | Compound 4 2.1 g | 122 mg | 6.4 g | 6,348 | 7,979 | 1.257 | ○ |
| (7) | AN 7g | Compound 4 2.1 g | 229 mg | 8.4 g | 6,789 | 13,252 | 1.952 | ○ |
| (8) | MA 7g | Compound 8 2.1 g | 144 mg | 8.4 g | 10,288 | 15,654 | 1.522 | - |
| % inside the parenthesis is theoretically computed value (w%) | | | | | | | | |

### (Quantification of phosphorous element and qualitative test) (ICP optical emission spectrometer)

0.1 mg of sample was added to 5 mL of nitric acid and dissolved with nitric acid at 380° C. 5 mL of nitric acid was added immediately before drying and hardening for further dissolution. This was repeated several times. After the completion of dissolution, the sample was cooled and diluted to 100 mL (1 mg/mL). 5 mL of this solution was diluted to 50 mL. The prepared solution was used as the measurement sample (0.5 mg/mL)
Measurement instrument: ICP optical emission spectrometer Optima 7300 DV
Measurement wavelength: 213.617 nm (P element)

As a result of the measurement, copolymers 2 and 3 contained 2.9% and 2.1% of phosphorous atom, respectively, suggesting that a phosphorous atom is certainly copolymerized. A phosphorous atom was also detected in copolymers 6 and 7, showing that styrene and acrylonitrile are both polymerized.

Generation of polymer of interest was confirmed by a qualitative test for copolymers 6 and 7 as described above.

### <Test on water absorption>

(1) About 0.5 g of a polymer fragment dried for 8 hours at 100°C was measured and placed in a glass container.
(2) 30 mL of ion exchange water was added to a glass container so that the entire polymer is constantly immersed in water.
(3) The water temperature was maintained at 23°C and left standing for 24 hours.
(4) The water on the polymer surface was wiped off to measure the weight.

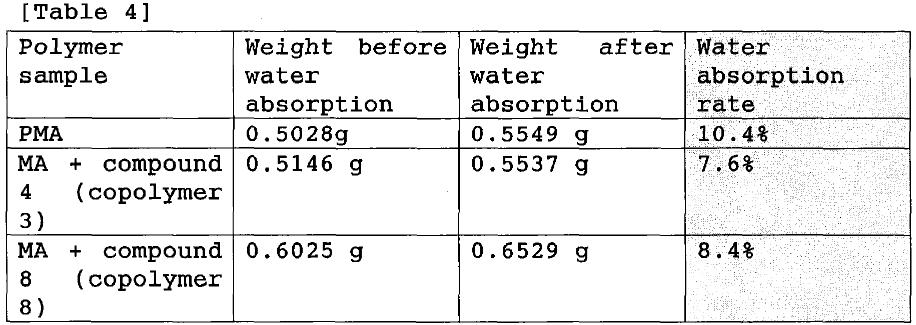

With polymethyl acrylate as the standard, water absorption of copolymers of compound 4 and compound 8 were compared by the method discussed above. This resulted in demonstrating that the water absorption decreases with compound 4, and water absorption of a polymer decreases by copolymerizing compound 4. It can be understood that a copolymer comprising compound 4 has lower water absorption than a copolymer of compound 8.

The increase and decrease in water absorption rate per 1 mol% of content was calculated from the increase and decrease in the theoretical monomer content (mol%) and water absorption rate. It can be understood in view of the above that there is a significant difference in performance.

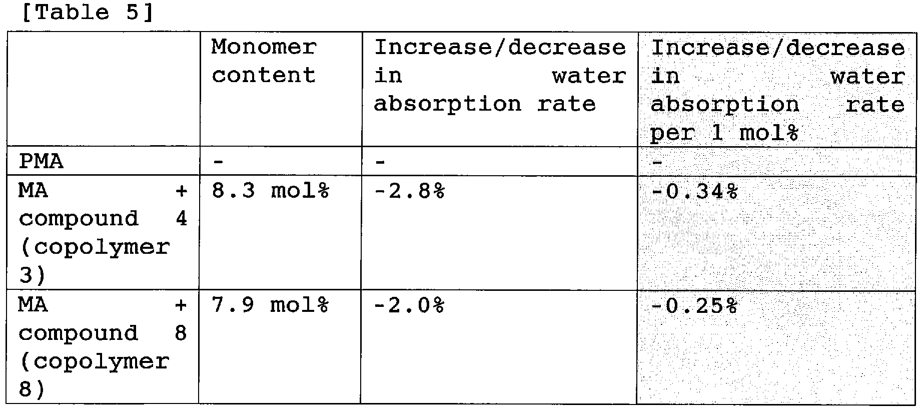

In this manner, compound 4 had a 36% increase in the decrease of water absorption rate per 1 mol% compared to compound 8. This demonstrates that hydrophobicity of compound 4 is much higher compared to the existing technology, compound 8.

### <Study on phosphorous addition>

Phosphorous compound 4 of the invention was used for a reaction to add phosphorous by utilizing radical polymerization. As a result, it was found that a compound comprising phosphorous can be readily obtained. Phosphorous compound 4 of the invention is a solid, which is easy to handle.

As disclosed above, the present invention is exemplified by the use of its preferred embodiments. However, it is understood that the scope of the present invention should be interpreted based solely on the Claims. It is also understood that any patent, any patent application, and any references cited herein should be incorporated herein by reference in the same manner as the contents are specifically described herein. The present application claims priority to Japanese Patent Application No. 2016-256290 (filed on December 28, 2016). The entire content thereof is incorporated herein by reference. It is also understood that any patent, any patent application, and any other references cited herein should be incorporated herein by reference in the same manner as the contents are specifically described herein.

### [Industrial Applicability]

A novel phosphorous compound can be used in various applications, such as anti-fog agents, flame retardants, electrical/electronic components, office appliance related components, automobile components, train components, aircraft components, fibers, sheets, films, acrylic glass, and polymerization additives. Such a phosphorous compound can also be used as a phosphorous adding agent.

## Claims

1. A compound set forth in the following general formula (I) 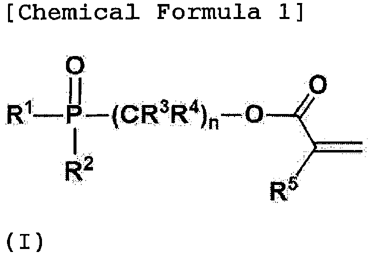 or a salt thereof, wherein
R¹ and R² are each independently a substituted or unsubstituted aryl group,
R³ and R⁴ are each independently hydrogen or a substituted or unsubstituted alkyl group,
n is 1 or 2, wherein if n is 2, each R³ may be the same or different, and each R⁴ may be the same or different, and
R⁵ is hydrogen or a substituted or unsubstituted alkyl group.

2. The compound or salt of claim 1, wherein R⁵ is hydrogen or a methyl group.

3. The compound or salt of claim 1 or 2, wherein R³ and R⁴ are each independently hydrogen or a C1-C4 alkyl group.

4. The compound or salt of any one of claims 1 to 3, wherein a substituent on the aryl group in R¹ and R² is selected from the group consisting of halogen, alkyl, - Oalkyl, -OH, -NO₂, -NH₂, -C(=O)H, -C(=O)alkyl, and - C(=O)Oalkyl.

5. The compound or salt of any one of claims 1 to 4, wherein a substituent on the aryl group in R¹ and R² is selected from the group consisting of halogen, -C1-C4 alkyl, -OC1-C4 alkyl, -OH, -NO₂, -NH₂, -C(=O)H, -C(=O)C1-C4 alkyl, and -C(=O)OC1-C4 alkyl.

6. The compound or salt of any one of claims 1 to 3, wherein R¹ and R² are both phenyl groups.

7. A homopolymer or a copolymer comprising, as a constituent component, the following general formula (II) 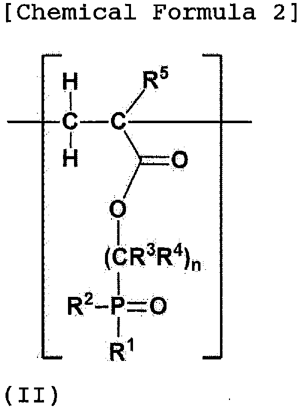 wherein
R¹ and R² are each independently a substituted or unsubstituted aryl group,
R³ and R⁴ are each independently hydrogen or a substituted or unsubstituted alkyl group,
n is 1 or 2, wherein if n is 2, each R³ may be the same or different, and each R⁴ may be the same or different, and
R⁵ is hydrogen or a substituted or unsubstituted alkyl group.

8. The homopolymer or copolymer of claim 7, wherein R⁵ is hydrogen or a methyl group.

9. The homopolymer or copolymer of claim 7 or 8, wherein R³ and R⁴ are each independently hydrogen or a C1-C4 alkyl group.

10. The homopolymer or copolymer of any one of claims 7 to 9, wherein a substituent on the aryl group in R¹ and R² is selected from the group consisting of halogen, alkyl, - Oalkyl, -OH, -NO₂, -NH₂, -C(=O)H, -C(=O)alkyl, and - C(=O)Oalkyl.

11. The homopolymer or copolymer of any one of claims 7 to 10, wherein a substituent on the aryl group in R¹ and R² is selected from the group consisting of halogen, -C1-C4 alkyl, -OC1-C4 alkyl, -OH, -NO₂, -NH₂, -C(=O)H, -C(=O)C1-C4 alkyl, and -C(=O)OC1-C4 alkyl.

12. The homopolymer or copolymer of any one of claims 7 to 9, wherein R¹ and R² are both phenyl groups.

13. The copolymer of any one of claims 7 to 12, which is a copolymer of (meth)acrylic acid, (meth)acrylic acid ester, (meth)acrylic acid halide, (meth)acrylate, styrene, or acrylonitrile.

14. The compound or salt of any one of claims 1 to 6, wherein the compound or salt is a solid.

15. The compound or salt of any one of claims 1 to 6, wherein the compound or salt is powder.

16. An additive comprising the compound or salt of any one of claims 1 to 6 and 14 to 15.

17. An anti-fog agent comprising the compound or salt of any one of claims 1 to 6 and 14 to 15.

18. A flame retardant comprising the compound or salt of any one of claims 1 to 6 and 14 to 15.

19. An electrical/electronic component, an office appliance related component, an automobile component, a train component, an aircraft component, or a fiber comprising the compound or salt of any one of claims 1 to 6 and 14 to 15.

20. A sheet, a film, or acrylic glass comprising the compound or salt of any one of claims 1 to 6 and 14 to 15.

21. A polymerization additive comprising the compound or salt of any one of claims 1 to 6 and 14 to 15.

22. A surface modifier comprising the compound or salt of any one of claims 1 to 6 and 14 to 15.

23. A phosphorous adding agent comprising the compound or salt of any one of claims 1 to 6 and 14 to 15.

24. An additive comprising the homopolymer or copolymer of any one of claims 7 to 13.

25. An anti-fog agent comprising the homopolymer or copolymer of any one of claims 7 to 13.

26. A flame retardant comprising the homopolymer or copolymer of any one of claims 7 to 13.

27. An electrical/electronic component, an office appliance related component, an automobile component, a train component, an aircraft component, or a fiber comprising the homopolymer or copolymer of any one of claims 7 to 13.

28. A sheet, a film, or acrylic glass comprising the homopolymer or copolymer of any one of claims 7 to 13.

29. A polymerization additive comprising the homopolymer or copolymer of any one of claims 7 to 13.

30. A surface modifier comprising the homopolymer or copolymer of any one of claims 7 to 13.

31. A phosphorous adding agent comprising the homopolymer or copolymer of any one of claims 7 to 13.
